(19) Europäisches Patentamt / European Patent Office / Office européen des brevets

(11) **EP 3 110 759 B1**

(12) **FASCICULE DE BREVET EUROPEEN**

(45) Date de publication et mention de la délivrance du brevet:
**24.06.2020 Bulletin 2020/26**

(21) Numéro de dépôt: **15707105.1**

(22) Date de dépôt: **26.02.2015**

(51) Int Cl.:
*C01B 33/193* [(2006.01)]    *C09C 1/30* [(2006.01)]
*C08K 3/36* [(2006.01)]    *B60C 1/00* [(2006.01)]

(86) Numéro de dépôt international:
**PCT/EP2015/053995**

(87) Numéro de publication internationale:
**WO 2015/154914 (15.10.2015 Gazette 2015/41)**

(54) **PROCEDE DE PREPARATION DE SILICES PRECIPITEES, SILICES PRECIPITEES ET LEURS UTILISATIONS, NOTAMMENT POUR LE RENFORCEMENT DE POLYMERES**

VERFAHREN ZUR HERSTELLUNG VON FÄLLUNGSKIESELSÄURE, FÄLLUNGSKIESELSÄURE UND DEREN VERWENDUNG, INSBESONDERE ZUR VERSTÄRKUNG VON POLYMEREN

PROCESS FOR THE PREPARATION OF PRECIPITATED SILICAS, PRECIPITATED SILICAS AND THEIR USES, IN PARTICULAR FOR THE REINFORCEMENT OF POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2014 FR 1400511**

(43) Date de publication de la demande:
**04.01.2017 Bulletin 2017/01**

(73) Titulaire: **Rhodia Operations**
**75009 Paris (FR)**

(72) Inventeurs:
• **BOIVIN, Cédric**
**F-69380 Chasselay (FR)**
• **GUY, Laurent**
**F-69140 Rillieux-la-Pape (FR)**
• **PERIN, Eric**
**F-69400 Villefranche sur Saone (FR)**
• **LAMIRI, Kilani**
**F-69210 L'Arbresle (FR)**

(74) Mandataire: **Ferri, Isabella et al**
**Solvay S.A.**
**Viale Lombardia, 20**
**20021 Bollate (MI) (IT)**

(56) Documents cités:
| | |
|---|---|
| WO-A1-99/52979 | WO-A1-02/053497 |
| WO-A1-2014/033300 | WO-A1-2014/033301 |
| WO-A1-2014/033303 | WO-A2-2011/121129 |
| FR-A1- 2 732 328 | FR-A1- 2 886 285 |
| FR-A1- 2 902 781 | FR-A1- 2 957 914 |

EP 3 110 759 B1

**Description**

La présente invention concerne un nouveau procédé de préparation de silice précipitée, de nouvelles silices précipitées et leurs applications, telles que le renforcement des polymères.

Il est connu d'employer des charges blanches renforçantes dans les polymères, en particulier les élastomères, comme par exemple de la silice précipitée.

Le but de la présente invention est de proposer notamment une charge alternative pour les compositions de polymères leur procurant de manière avantageuse une réduction de leur viscosité et une amélioration de leurs propriétés dynamiques tout en conservant leurs propriétés mécaniques. Elle permet ainsi de manière avantageuse une amélioration du compromis hystérèse/renforcement.

La présente invention propose tout d'abord un nouveau procédé de préparation de silice précipitée mettant en œuvre, au cours de ou après l'opération de délitage, au moins un acide polycarboxylique.

L'utilisation d'acide carboxylique lors de la préparation de silice précipitée à faible reprise en eau, utilisable notamment comme charge renforçante dans les matrices silicones, est décrit dans FR2886285A1. FR2886285A1 ne décrit pas une silice selon la revendication 1 ni le procédé pour sa préparation.

De manière générale, la préparation de silice précipitée s'effectue par réaction de précipitation d'un silicate, tel qu'un silicate de métal alcalin (silicate de sodium par exemple), avec un agent acidifiant (acide sulfurique par exemple), puis séparation par filtration, avec obtention d'un gâteau de filtration, de la silice précipitée obtenue, ensuite délitage dudit gâteau de filtration et enfin séchage (généralement par atomisation). Le mode de précipitation de la silice peut être quelconque : notamment, addition d'agent acidifiant sur un pied de cuve de silicate, addition simultanée totale ou partielle d'agent acidifiant et de silicate sur un pied de cuve d'eau ou de silicate.

L'un des objets de l'invention est un nouveau procédé de préparation d'une silice précipitée du type comprenant la réaction de précipitation entre un silicate et un agent acidifiant ce par quoi l'on obtient une suspension de silice précipitée, puis la séparation et le séchage de cette suspension, dans lequel :

- on ajoute au moins un composé de l'aluminium lors de la réaction de précipitation,
- on filtre la suspension de silice obtenue à l'issue de la réaction de précipitation,
- on soumet le gâteau de filtration obtenu à l'issue de la filtration à une opération de délitage,
- on sèche le gâteau de filtration ainsi obtenu, de préférence présentant un taux de matière sèche d'au plus 25 %,

ledit procédé étant caractérisé en ce qu'on ajoute au gâteau de filtration, soit au cours de l'opération de délitage, soit après l'opération de délitage et avant l'étape de séchage, au moins un acide polycarboxylique (par exemple un mélange d'acides polycarboxyliques) choisi parmi les acides polycarboxyliques linéaires ou ramifiés, saturés ou insaturés, aliphatiques ayant de 2 à 20 atomes de carbone ou aromatiques.

Selon l'invention, la réaction de précipitation du silicate avec l'agent acidifiant au cours de laquelle on ajoute au moins un composé de l'aluminium peut être réalisée selon une réaction de précipitation telle que décrite dans les demandes de brevet EP-A-0762992, EP-A-0762993, EP-A-0983966, EP-A-1355856.

Un procédé de préparation de silice précipitée contenant de l'aluminium est aussi décrit dans la demande FR2957914.

De préférence, le procédé de préparation d'une silice précipitée selon l'invention comprenant la réaction de précipitation entre un silicate et un agent acidifiant ce par quoi l'on obtient une suspension de silice précipitée, puis la séparation et le séchage de cette suspension est un procédé de préparation d'une silice précipitée caractérisé en ce qu'il comprend les étapes successives suivantes :

- on réalise la réaction de précipitation de la manière suivante :

  (i) on forme un pied de cuve initial comportant un silicate et un électrolyte, la concentration en silicate (exprimée en $SiO_2$) dans ledit pied de cuve initial étant inférieure à 100 g/l et la concentration en électrolyte dans ledit pied de cuve initial étant inférieure à 17 g/l,
  (ii) on ajoute l'agent acidifiant audit pied de cuve jusqu'à l'obtention d'une valeur du pH du milieu réactionnel d'au moins 7,
  (iii) on ajoute au milieu réactionnel, simultanément, de l'agent acidifiant et un silicate,

- on filtre la suspension de silice obtenue,
- on soumet le gâteau de filtration obtenu à l'issue de la filtration à une étape de délitage,
- on sèche le gâteau de filtration ainsi obtenu, de préférence présentant un taux de matière sèche d'au plus 25 %,

ledit procédé comprenant une des trois opérations (a), (b) ou (c) suivantes :

(a) on ajoute, après l'étape (iii), au milieu réactionnel au moins un composé A de l'aluminium et, ensuite ou simultanément, un agent basique,

(b) on ajoute, après l'étape (iii) ou à la place de l'étape (iii), au milieu réactionnel simultanément un silicate et au moins un composé A de l'aluminium,

(c) l'étape (iii) est réalisée en ajoutant simultanément au milieu réactionnel de l'agent acidifiant, un silicate et au moins un composé B de l'aluminium, et

étant caractérisé en ce qu'on ajoute au gâteau de filtration, soit au cours de l'opération de délitage, soit après l'opération de délitage et avant l'étape de séchage, au moins un acide polycarboxylique (par exemple un mélange d'acides polycarboxyliques).

L'opération de délitage est une opération de fluidification ou liquéfaction, dans laquelle le gâteau de filtration est rendu liquide, la silice précipitée se retrouvant en suspension.

Selon un premier mode de réalisation de l'invention, le gâteau de filtration est soumis à une opération de délitage pendant laquelle ou après laquelle est introduit au moins un acide polycarboxylique. Le mélange alors obtenu (suspension de silice précipitée) est ensuite séché (généralement par atomisation).

Dans une première variante de ce mode de réalisation, cette opération de délitage est réalisée en soumettant le gâteau de filtration à une action chimique par addition d'au moins un acide polycarboxylique, de préférence couplée à une action mécanique (par exemple par passage dans un bac agité en continu ou dans un broyeur de type colloïdal) qui induit habituellement une réduction granulométrique de la silice en suspension. La suspension (en particulier aqueuse) obtenue après délitage présente une viscosité relativement faible.

Dans une seconde variante de ce premier mode de réalisation, cette opération de délitage est réalisée en soumettant le gâteau de filtration à une action mécanique (par exemple par passage dans un bac agité en continu ou dans un broyeur de type colloïdal) qui induit habituellement une réduction granulométrique de la silice en suspension.

Dans cette seconde variante, on ajoute au moins un acide polycarboxylique après l'opération de délitage, c'est-à-dire au gâteau de silice délité.

Selon un second mode de réalisation préféré de l'invention, l'opération de délitage comprend l'addition d'au moins un composé C de l'aluminium.

Ainsi, selon ce second mode de réalisation de l'invention, le gâteau de filtration est soumis à une opération de délitage pendant laquelle sont introduits au moins un composé C de l'aluminium et au moins un acide polycarboxylique, ou après laquelle est introduit au moins un acide polycarboxylique. Le mélange alors obtenu (suspension de silice précipitée) est ensuite séché (généralement par atomisation).

Dans deux premières variantes de ce second mode de réalisation de l'invention, cette opération de délitage est réalisée en soumettant le gâteau de filtration à une action chimique par addition d'au moins un composé C de l'aluminium, par exemple de l'aluminate de sodium, et d'au moins un acide polycarboxylique, de préférence couplée à une action mécanique (par exemple par passage dans un bac agité en continu ou dans un broyeur de type colloïdal) qui induit habituellement une réduction granulométrique de la silice en suspension. La suspension (en particulier aqueuse) obtenue après délitage présente une viscosité relativement faible.

Dans la première variante de ce mode de réalisation, au cours de l'opération de délitage, au moins un composé C de l'aluminium et au moins un acide polycarboxylique sont simultanément ajoutés (co-addition) au gâteau de filtration.

Dans la deuxième variante de ce mode de réalisation, au cours de l'opération de délitage, au moins un composé C de l'aluminium est ajouté au gâteau de filtration préalablement à l'ajout d'au moins un acide polycarboxylique.

Dans une troisième variante de ce second mode de réalisation, cette opération de délitage est réalisée en soumettant le gâteau de filtration à une action chimique par addition d'au moins un composé C de l'aluminium, par exemple de l'aluminate de sodium, de préférence couplée à une action mécanique (par exemple par passage dans un bac agité en continu ou dans un broyeur de type colloïdal) qui induit habituellement une réduction granulométrique de la silice en suspension.

Dans cette troisième variante, on ajoute au moins un acide polycarboxylique après l'opération de délitage, c'est-à-dire au gâteau de silice délité.

Selon l'invention, le gâteau de filtration devant être soumis à l'opération de délitage peut être composé du mélange de plusieurs gâteaux de filtration, chacun desdits gâteaux étant obtenu par filtration d'une partie de la suspension de silice obtenue préalablement (cette suspension étant, préalablement à la filtration, fractionnée en plusieurs parties).

Selon l'invention, on entend par « acide polycarboxylique » des acides polycarboxyliques comprenant au moins deux groupes fonctionnels acide carboxylique. L'expression « groupe fonctionnel acide carboxylique » est prise ici dans son sens habituel et se réfère au groupe fonctionnel -COOH.

L'acide polycarboxylique employé selon l'invention peut avoir deux, trois, quatre ou plus de quatre groupes fonctionnels acide carboxylique.

Selon l'invention, l'acide polycarboxylique est de préférence choisi parmi les acides dicarboxyliques et les acides tricarboxyliques.

Selon l'invention, l'acide polycarboxylique employé est un acide polycarboxylique linéaire ou ramifié, saturé ou insaturé, aliphatique ayant de 2 à 20 atomes de carbone ou aromatique. L'acide polycarboxylique peut éventuellement comprendre des groupes hydroxyles et/ou des atomes d'halogène. L'acide polycarboxylique aliphatique peut éventuellement comprendre des hétéroatomes sur la chaîne principale, par exemple N, S. Généralement, l'acide polycarboxylique employé selon l'invention est choisi dans le groupe constitué par les acides polycarboxyliques aliphatiques linéaires ou ramifiés, saturés ou insaturés ayant de 2 à 16 atomes de carbone et les acides polycarboxyliques aromatiques.

Parmi les acides polycarboxyliques aliphatiques, on peut mentionner les acides polycarboxyliques linéaires, saturés ou insaturés, ayant de 2 à 14 atomes de carbone, de préférence de 2 à 12 atomes de carbone. L'acide polycarboxylique employé peut avoir 2, 3, 4, 5, 6, 7, 8, 9, 10, 11 ou 12 atomes de carbone. De manière avantageuse, l'acide polycarboxylique employé peut avoir 4, 5, 6, 7, 8, 9 ou 10 atomes de carbone, de préférence 4, 5, 6, 7 ou 8 atomes de carbone. Par exemple, l'acide polycarboxylique employé peut avoir 4, 5 ou 6 atomes de carbone.

Notamment, on peut citer comme exemples non limitatifs d'acides polycarboxyliques aliphatiques linéaires utilisés dans l'invention les acides choisis dans le groupe constitué de l'acide oxalique, l'acide malonique, l'acide tricarballylique, l'acide succinique, l'acide glutarique, l'acide adipique, l'acide pimélique, l'acide subérique, l'acide azélaïque, l'acide sébacique.

Parmi les acides polycarboxyliques ramifiés, on peut citer l'acide méthylsuccinique, l'acide éthylsuccinique, l'acide oxalosuccinique, l'acide méthyladipique, l'acide méthylglutarique, l'acide diméthylglutarique. Par acide méthylglutarique on entend à la fois l'acide 2-méthylglutarique et l'acide 3- méthylglutarique ainsi que le mélange de ces deux isomères en toutes proportions. L'expression « acide 2-méthylglutarique » est utilisée pour indiquer aussi bien les formes (S) et (R) du composé que le mélange racémique.

Parmi les acides polycarboxyliques insaturés, on peut citer l'acide maléique, l'acide fumarique, l'acide itaconique, l'acide muconique, l'acide aconitique, l'acide traumatique et l'acide glutaconique.

Parmi les acides polycarboxyliques comprenant des groupes hydroxyles, on peut citer l'acide malique, l'acide citrique, l'acide isocitrique et l'acide tartarique.

Parmi les acides polycarboxyliques aromatiques, on peut mentionner les acides phtaliques, à savoir l'acide phtalique, l'acide orthophtalique, l'acide isophtalique, l'acide trimésique et l'acide trimellitique.

De préférence, l'acide polycarboxylique employé dans le procédé selon l'invention est choisi dans le groupe constitué par l'acide oxalique, l'acide malonique, l'acide tricarballylique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique.

De préférence, les acides dicarboxyliques et tricarboxyliques sont choisis parmi l'acide adipique, l'acide succinique, l'acide éthylsuccinique, l'acide glutarique, l'acide méthylglutarique, l'acide oxalique, l'acide citrique.

L'acide polycarboxylique peut également être choisi dans le groupe constitué par l'acide oxalique, l'acide malonique, l'acide tricarballyique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique. De préférence, l'acide polycarboxylique peut être choisi dans le groupe constitué par l'acide oxalique, l'acide malonique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique. De manière très préférée, l'acide polycarboxylique peut être choisi dans le groupe constitué par l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide tartarique.

Dans un premier mode de réalisation de l'invention, on ajoute un unique acide polycarboxylique au gâteau de filtration.

De préférence, l'acide polycarboxylique est alors l'acide succinique.

De manière préférée, lorsque l'acide polycarboxylique est l'acide succinique, il est ajouté au gâteau de filtration après l'opération de délitage.

Dans un second mode de réalisation préféré de l'invention, on ajoute un mélange d'acides polycarboxyliques au gâteau de filtration, ledit mélange comprenant au moins deux acides polycarboxyliques tels que définis ci-dessus. Le mélange peut comprendre deux, trois, quatre ou plus de quatre acides polycarboxyliques.

De préférence, les acides polycarboxyliques du mélange sont alors choisis parmi l'acide adipique, l'acide succinique, l'acide éthylsuccinique, l'acide glutarique, l'acide méthylglutarique, l'acide oxalique, l'acide citrique.

Selon l'invention, le mélange d'acides polycarboxyliques est de préférence un mélange d'acides dicarboxyliques et/ou tricarboxyliques, notamment un mélange d'au moins deux, de préférence d'au moins trois acides dicarboxyliques et/ou tricarboxyliques, en particulier un mélange de trois acides dicarboxyliques et/ou tricarboxyliques.

De manière préférée, le mélange d'acides polycarboxyliques est un mélange d'acides dicarboxyliques, notamment un mélange d'au moins trois acides dicarboxyliques, en particulier un mélange de trois acides dicarboxyliques. En général le mélange consiste en trois acides dicarboxyliques, bien que des impuretés puissent être présentes en une quantité n'excédant pas généralement 2,00 % en poids du mélange total.

Selon une variante préférée de l'invention, le mélange d'acides polycarboxyliques utilisé dans l'invention comprend les acides suivants : acide adipique, acide glutarique et acide succinique. Par exemple, le mélange d'acides polycarboxyliques comprend 15,00 à 35,00 % en poids d'acide adipique, 40,00 à 60,00 % en poids d'acide glutarique et 15,00 à 25,00 % en poids d'acide succinique.

Le mélange d'acides polycarboxyliques selon cette première variante préférée de l'invention peut être issu d'un procédé de fabrication de l'acide adipique.

Selon une autre variante préférée de l'invention, le mélange d'acides polycarboxyliques utilisé dans l'invention comprend les acides suivants : acide méthylglutarique, acide éthylsuccinique et acide adipique. Les trois acides peuvent être présents dans le mélange en toutes proportions. Par exemple, le mélange d'acides polycarboxyliques comprend 60,00 à 96,00 % en poids d'acide méthylglutarique, 3,90 à 20,00 % en poids d'acide éthylsuccinique et 0,05 à 20,00 % en poids d'acide adipique.

Le mélange d'acides polycarboxyliques selon cette seconde variante préférée de l'invention peut être issu d'un procédé de fabrication de l'acide adipique.

De manière avantageuse, le mélange d'acides polycarboxyliques selon cette seconde variante préférée de l'invention peut être obtenu par hydrolyse acide, de préférence par hydrolyse basique, d'un mélange de méthylglutaronitrile, d'éthylsuccinonitrile et d'adiponitrile issu du procédé de fabrication de l'adiponitrile par hydrocyanation du butadiène, l'adiponitrile étant un intermédiaire important pour la synthèse de l'hexaméthylène diamine.

Une partie ou la totalité de l' (des) acide(s) polycarboxylique(s), en particulier acides dicarboxyliques et/ou tricarboxyliques, employé(s) selon l'invention peut être sous forme de dérivé d'acide carboxylique, à savoir sous la forme d'anhydride, d'ester, de sel (carboxylate) de métal alcalin (par exemple de sodium ou de potassium), de sel (carboxylate) de métal alcalino-terreux (par exemple de calcium) ou de sel (carboxylate) d'ammonium. Le terme « carboxylate » sera utilisé ci-après pour désigner les dérivés des groupes fonctionnels acide carboxylique tels que définis précédemment.

Par exemple, le mélange d'acides polycarboxyliques peut être un mélange comprenant :

- de l'acide méthylglutarique (en particulier de 60,00 à 96,00 % en poids, par exemple de 90,00 à 95,50 % en poids),
- de l'anhydride éthylsuccinique (en particulier de 3,90 à 20,00 % en poids, par exemple de 3,90 à 9,70 % en poids),
- de l'acide adipique (en particulier de 0,05 à 20,00 % en poids, par exemple de 0,10 à 0,30 % en poids).

Le mélange d'acides polycarboxyliques peut également être un mélange comprenant :

- de l'acide méthylglutarique (en particulier de 10,00 à 50,00 % en poids, par exemple de 25,00 à 40,00 % en poids),
- de l'anhydride méthylglutarique (en particulier de 40,00 à 80,00 % en poids, par exemple de 55,00 à 70,00 % en poids),
- de l'anhydride éthylsuccinique (en particulier de 3,90 à 20,00 % en poids, par exemple de 3,90 à 9,70 %),
- de l'acide adipique (en particulier de 0,05 à 20,00 % en poids, par exemple de 0,10 à 0,30 % en poids).

Les mélanges utilisés selon l'invention peuvent éventuellement contenir des impuretés.

Les acides polycarboxyliques utilisés dans l'invention peuvent éventuellement être préneutralisés (notamment en les prétraitant avec une base, par exemple de type soude ou potasse) avant leur ajout au gâteau de filtration. Cela permet notamment de modifier le pH de la silice obtenue.

Les acides polycarboxyliques peuvent être employés sous forme de solution aqueuse.

De préférence, le composé C de l'aluminium employé dans le second mode de réalisation de l'invention lors de l'opération de délitage est choisi parmi les aluminates de métal alcalin. En particulier, le composé de l'aluminium est l'aluminate de sodium.

Selon l'invention, la quantité de composé C de l'aluminium (en particulier l'aluminate de sodium) utilisé est généralement telle que le rapport composé de l'aluminium / quantité de silice exprimée en $SiO_2$ contenue dans le gâteau de filtration est compris entre 0,20 et 0,50 % en poids, de préférence entre 0,25 et 0,45 % en poids.

La quantité d'acide(s) polycarboxylique(s) employée est en général telle que le rapport acide(s) polycarboxylique(s) / quantité de silice exprimée en $SiO_2$ contenue dans le gâteau de filtration (au moment de l'ajout d'au moins un acide polycarboxylique) est compris entre 0,50 et 2,00 % en poids, de préférence entre 0,55 et 1,75 % en poids, en particulier entre 0,60 et 1,20 % en poids, par exemple entre 0,65 et 1,25 % en poids.

Dans l'invention, le gâteau de filtration peut éventuellement être lavé.

La mise en œuvre, au cours de ou après l'opération de délitage, d'un mélange d'acides polycarboxyliques et la succession d'étapes particulières confère aux produits obtenus leurs caractéristiques et propriétés particulières.

Le choix de l'agent acidifiant et du silicate de métal alcalin M se fait d'une manière bien connue en soi.

On utilise généralement comme agent acidifiant un acide minéral fort tel que l'acide sulfurique, l'acide nitrique ou l'acide chlorhydrique ou encore un acide organique tel que l'acide acétique, l'acide formique, l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut utiliser en tant que silicate toute forme courante de silicates tels que les métasilicates, disilicates et avantageusement un silicate de métal alcalin M dans lequel M est le sodium ou le potassium.

Le silicate peut présenter une concentration (exprimée en $SiO_2$) comprise entre 40 et 330 g/l, par exemple entre 60 et 300 g/l.

De manière préférée, on emploie, comme agent acidifiant, l'acide sulfurique et, comme silicate, le silicate de sodium.

Dans le cas où l'on utilise le silicate de sodium, celui-ci présente, en général, un rapport pondéral $SiO_2/Na_2O$ compris entre 2,0 et 4,0, en particulier entre 2,4 et 3,9, par exemple entre 3,1 et 3,8.

On forme tout d'abord un pied de cuve aqueux qui comprend du silicate ainsi qu'un électrolyte (étape (i)). La quantité de silicate présente dans le pied de cuve initial ne représente avantageusement qu'une partie de la quantité totale de silicate engagée dans la réaction.

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

La concentration en électrolyte dans le pied de cuve initial est (supérieure à 0 g/l et) inférieure à 17 g/l, par exemple inférieure à 14 g/l.

La concentration en silicate (exprimée en $SiO_2$) dans le pied de cuve initial est (supérieure à 0 g/l et) inférieure à 100 g/l ; de préférence, cette concentration est inférieure à 90 g/l, notamment inférieure à 85 g/l.

La deuxième étape (étape (ii)) consiste à ajouter l'agent acidifiant dans le pied de cuve de composition décrite plus haut.

Cette addition qui entraîne une baisse corrélative du pH du milieu réactionnel se fait jusqu'à ce qu'on atteigne une valeur du pH d'au moins 7,0, généralement comprise entre 7,0 et 8,0.

Une fois qu'est atteinte la valeur souhaitée de pH, on procède alors à une addition simultanée (étape (iii)) d'agent acidifiant et de silicate.

Cette addition simultanée est généralement réalisée de manière telle que la valeur du pH du milieu réactionnel soit constamment égale (à +/- 0,1 près) à celle atteinte à l'issue de l'étape (ii).

Ce procédé de préparation comprend une des trois opérations (a), (b) ou (c) mentionnées précédemment.

Dans une première variante de ce procédé de préparation (c'est-à-dire lorsque celui-ci comprend l'opération (a)), on effectue avantageusement, après avoir réalisé la précipitation selon les étapes (i), (ii) et (iii) décrites précédemment, les étapes suivantes :

(iv) on ajoute au milieu réactionnel (c'est-à-dire à la suspension ou bouillie réactionnelle obtenue) au moins un composé A de l'aluminium,

(v) on ajoute au milieu réactionnel un agent basique, de préférence jusqu'à l'obtention d'une valeur du pH du milieu réactionnel comprise entre 6,5 et 10,0, en particulier entre 7,2 et 8,6, puis

(vi) on ajoute au milieu réactionnel de l'agent acidifiant, de préférence jusqu'à l'obtention d'une valeur du pH du milieu réactionnel compris entre 3,0 et 5,0, en particulier entre 3,4 et 4,5.

L'étape (v) peut être réalisée simultanément ou, de préférence, après l'étape (iv).

On peut effectuer, après l'addition simultanée de l'étape (iii), un mûrissement du milieu réactionnel, ce mûrissement pouvant par exemple durer de 1 à 60 minutes, en particulier de 3 à 30 minutes.

Dans cette première variante, il peut être souhaitable, entre l'étape (iii) et l'étape (iv), et notamment avant ledit mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3,0 et 6,5, en particulier entre 4,0 et 6,0.

L'agent acidifiant utilisé lors de cette addition est généralement identique à celui employé lors des étapes (ii), (iii) et (vi) de la première variante du procédé.

Un mûrissement du milieu réactionnel est habituellement effectué entre l'étape (v) et l'étape (vi), par exemple pendant 2 à 60 minutes, en particulier pendant 5 à 45 minutes.

De même, un mûrissement du milieu réactionnel est le plus souvent effectué après l'étape (vi), par exemple pendant 2 à 60 minutes, en particulier pendant 5 à 30 minutes.

L'agent basique utilisé lors de l'étape (v) peut être une solution d'ammoniaque ou, de préférence, une solution d'hydroxyde de sodium (ou soude).

Dans une deuxième variante dudit procédé (c'est-à-dire lorsque celui-ci comprend l'opération (b)), on effectue, après les étapes (i), (ii) et (iii) décrites précédemment ou à la place de l'étape (iii) décrite précédemment, une étape (iv) qui consiste à ajouter au milieu réactionnel simultanément un silicate et au moins un composé A de l'aluminium.

Seulement dans le cas où le composé A de l'aluminium est suffisamment acide (par exemple cela peut être le cas lorsque ce composé A est un sulfate d'aluminium), il est en effet possible (mais pas obligatoire) de substituer l'étape (iii) par l'étape (iv), ce qui signifie en fait que l'étape (iii) et l'étape (iv) ne forment alors plus qu'une seule étape, le composé A de l'aluminium jouant alors le rôle d'agent acidifiant.

L'addition simultanée de l'étape (iv) est généralement réalisée de manière telle que la valeur du pH du milieu réactionnel soit constamment égale (à +/- 0,1 près) à celle atteinte à l'issue de l'étape (iii) ou de l'étape (ii).

On peut effectuer, après l'addition simultanée de l'étape (iv), un mûrissement du milieu réactionnel, ce mûrissement pouvant par exemple durer de 2 à 60 minutes, en particulier de 5 à 30 minutes.

Dans cette deuxième variante, il peut être souhaitable, après l'étape (iv), et notamment après ce mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3,0 et 6,5, en particulier entre 4,0 et 6,0.

L'agent acidifiant utilisé lors de cette addition est généralement identique à celui employé lors de l'étape (ii) de la deuxième variante du procédé.

Un mûrissement du milieu réactionnel est habituellement effectué après cette addition d'agent acidifiant, par exemple pendant 1 à 60 minutes, en particulier pendant 3 à 30 minutes.

Le composé A de l'aluminium employé dans le procédé de préparation (en particulier dans les deux premières variantes mentionnées) est en général un sel organique ou inorganique de l'aluminium.

A titre d'exemples de sel organique, on peut citer notamment les sels d'acides carboxyliques ou polycarboxyliques, comme les sels d'acide acétique, citrique, tartrique ou oxalique.

A titre d'exemples de sel inorganique, on peut citer notamment les halogénures et les oxyhalogénures (comme les chlorures, les oxychlorures), les nitrates, les phosphates, les sulfates et les oxysulfates.

Dans la pratique, le composé A de l'aluminium peut être utilisé sous la forme d'une solution, en général aqueuse.

De préférence, on emploie à titre de composé A de l'aluminium un sulfate d'aluminium.

Dans une troisième variante de ce procédé de préparation (c'est-à-dire lorsque celui-ci comprend l'opération (c)), on effectue avantageusement, après avoir réalisé les étapes (i) et (ii) décrites précédemment, une étape (iii) qui consiste à ajouter au milieu réactionnel simultanément de l'agent acidifiant, un silicate et au moins un composé B de l'aluminium.

Cette addition simultanée est généralement réalisée de manière telle que la valeur du pH du milieu réactionnel soit constamment égale (à +/- 0,1 près) à celle atteinte à l'issue de l'étape (ii).

Dans cette troisième variante, il peut être souhaitable, après l'étape (iii), d'ajouter au milieu réactionnel une quantité supplémentaire d'agent acidifiant. Cette addition se fait généralement jusqu'à l'obtention d'une valeur du pH du milieu réactionnel comprise entre 3,0 et 6,9, en particulier entre 4,0 et 6,6.

L'agent acidifiant utilisé lors de cette addition est généralement identique à celui employé lors des étapes (ii) et (iii).

Un mûrissement du milieu réactionnel est habituellement effectué après cette addition d'agent acidifiant, par exemple pendant 1 à 60 minutes, en particulier pendant 3 à 30 minutes.

Le composé B de l'aluminium employé dans la troisième variante est, en général, un aluminate de métal alcalin, notamment de potassium ou, de manière préférée, de sodium.

Le composé B de l'aluminium est habituellement différent du composé A de l'aluminium mentionné précédemment et consiste, en général, en un aluminate de métal alcalin, notamment de potassium ou, de manière préférée, de sodium.

Le composé C de l'aluminium mentionné précédemment est habituellement identique au composé B de l'aluminium.

La température du milieu réactionnel est généralement comprise entre 70 et 98 °C.

Selon une variante de l'invention, la réaction est effectuée à une température constante, de préférence comprise entre 75 et 96 °C.

Selon une autre variante (préférée) de l'invention, la température de fin de réaction est plus élevée que la température de début de réaction : ainsi, on maintient la température au début de la réaction de préférence entre 70 et 96 °C, puis on augmente la température en quelques minutes, de préférence jusqu'à une valeur comprise entre 80 et 98 °C, valeur à laquelle elle est maintenue jusqu'à la fin de la réaction ; les opérations (a) ou (b) sont habituellement effectuées à cette valeur constante de température.

On obtient, à l'issue des étapes qui viennent d'être décrites, une bouillie de silice qui est ensuite séparée (séparation liquide-solide).

La séparation mise en œuvre dans le procédé de préparation selon l'invention comprend habituellement une filtration, suivie d'un lavage si nécessaire, effectuée au moyen de toute méthode convenable, par exemple au moyen d'un filtre à bande, d'un filtre sous-vide ou, de préférence, d'un filtre presse.

Le gâteau de filtration est alors soumis à une opération de délitage. Conformément à l'exposé ci-dessus, on ajoute au moins un acide polycarboxylique au cours de ou après l'opération de délitage.

Le gâteau de filtration délité est ensuite séché.

De préférence, dans ce procédé de préparation, la suspension de silice précipitée obtenue après l'opération de délitage doit présenter immédiatement avant son séchage un taux de matière sèche d'au plus 24 % en poids, notamment d'au plus 23 % en poids, en particulier d'au plus 22 % en poids.

Le séchage peut se faire selon tout moyen connu en soi. De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Lorsque le séchage est effectué à l'aide d'un atomiseur à buses, la silice précipitée susceptible d'être alors obtenue se présente habituellement sous forme de billes sensiblement sphériques.

A l'issue de ce séchage, on peut éventuellement procéder à une étape de broyage sur le produit récupéré ; la silice précipitée susceptible d'être alors obtenue se présente généralement sous forme d'une poudre.

Lorsque le séchage est effectué à l'aide d'un atomiseur à turbines, la silice précipitée susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice...), une extrusion ou, de préférence, un compactage à sec. Lorsqu'on met en œuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être alors obtenue par cette étape d'agglomération se présente généralement sous la forme de granulés.

L'invention est également relative aux silices précipitées obtenues ou susceptibles d'être obtenues par le procédé selon l'invention.

En général ces silices précipitées présentent à leur surface des molécules de l' (des) acide(s) polycarboxylique(s) employé(s) et/ou du (des) carboxylate(s) correspondant à l' (aux) acide(s) polycarboxylique(s) employé(s).

La présente invention a en outre pour objet une silice précipitée aux caractéristiques particulières, notamment utilisable comme charge alternative pour les compositions de polymères leur procurant de manière avantageuse une réduction de leur viscosité et une amélioration de leurs propriétés dynamiques tout en conservant leurs propriétés mécaniques.

Dans l'exposé qui suit, la surface spécifique BET est déterminée selon la méthode de BRUNAUER - EMMET - TELLER décrite dans « The Journal of the American Chemical Society », Vol. 60, page 309, février 1938 et correspondant à la norme NF ISO 5794-1 annexe D (juin 2010). La surface spécifique CTAB est la surface externe, pouvant être déterminée selon la norme NF ISO 5794-1 annexe G (juin 2010).

La teneur en acide polycarboxylique + carboxylate correspondant notée (C), exprimée en carbone total, peut être mesurée à l'aide d'un analyseur carbone soufre comme l'Horiba EMIA 320 V2. Le principe de l'analyseur carbone soufre est basé sur la combustion d'un échantillon solide dans un flux d'oxygène dans un four à induction (réglé à environ 170 mA) et en présence d'accélérateurs de combustion (environ 2 grammes de tungstène (en particulier Lecocel 763-266) et environ 1 gramme de fer). L'analyse dure environ 1 minute.

Le carbone contenu dans l'échantillon à analyser (masse d'environ 0,2 gramme) se combine avec l'oxygène pour former $CO_2$, CO. On analyse ensuite ces gaz de décomposition par un détecteur infrarouge.

L'humidité de l'échantillon et l'eau produite lors de ces réactions d'oxydation est éliminée par passage sur une cartouche contenant un agent déshydratant : le perchlorate de magnésium afin de ne pas interférer sur la mesure infrarouge.

Le résultat est exprimé en pourcentage massique en élément Carbone.

La teneur en aluminium notée (Al) peut être déterminée par Fluorescence X dispersif en longueur d'onde par exemple avec un spectromètre Panalytical 2400 ou, de préférence, avec un spectromètre Panalytical MagixPro PW2540. Le principe de la méthode de mesure par Fluorescence X est le suivant :

- un broyage de la silice est nécessaire quand elle se présente sous forme de billes sensiblement sphériques (microperles) ou de granulés, jusqu'à l'obtention d'une poudre homogène. Le broyage peut être réalisé avec un mortier en agate (broyage de 15 grammes de silice environ pendant une durée de 2 minutes) ou tout type de broyeur ne contenant pas d'aluminium,

- la poudre est analysée telle quelle dans une cuve de 40 mm de diamètre avec un film de polypropylène de 6 $\mu$m, sous atmosphère d'hélium, à un diamètre d'irradiation de 37 mm, et la quantité de silice analysée est de 9 cm$^3$. La mesure de la teneur en aluminium, qui nécessite au maximum 5 minutes, est obtenue à partir de la raie K$\alpha$ (angle 2$\theta$ = 145°, cristal PE002, collimateur 550 $\mu$m, détecteur flux gazeux, tube en rhodium, 32 kV et 125 mA). L'intensité de cette raie est proportionnelle à la teneur en aluminium. On peut employer un étalonnage préalable réalisé au moyen d'une autre méthode de mesure, telle que l'ICP-AES (" Inductively Coupled Plasma - Atomic Emission Spectroscopy ").

La teneur en aluminium peut également être mesurée par toute autre méthode convenable, par exemple par ICP-AES après mise en solution dans l'eau en présence d'acide fluorhydrique.

La présence d'acide(s) polycarboxylique(s) sous la forme acide et/ou sous la forme carboxylate peut être établie par Infrarouge de surface ou ATR-diamant (Attenuated Total Reflection).

L'analyse Infrarouge de surface (par transmission) est réalisée sur un spectromètre Bruker Equinoxe 55 sur une pastille de produit pur. La pastille est obtenue après broyage de la silice telle quelle dans un mortier en agate et pastillage à 2 T/cm$^2$ pendant 10 secondes. Le diamètre de la pastille est de 17 mm. Le poids de la pastille est entre 10 et 20 mg. La pastille ainsi obtenue est placée dans l'enceinte sous vide secondaire (10$^{-7}$ mbar) du spectromètre pendant une heure à température ambiante avant l'analyse par transmission. L'acquisition a lieu sous vide secondaire (conditions d'acquisition : de 400 cm$^{-1}$ à 6000 cm$^{-1}$ ; nombre de scans : 100 ; résolution : 2 cm$^{-1}$).

L'analyse par ATR-diamant, réalisée sur un spectromètre Bruker Tensor 27, consiste à déposer sur le diamant une pointe de spatule de silice préalablement broyée dans un mortier en agate, puis à exercer une pression. Le spectre Infrarouge est enregistré sur le spectromètre en 20 scans, de 650 cm$^{-1}$ à 4000 cm$^{-1}$. La résolution est de 4 cm$^{-1}$.

Les volumes poreux et diamètres de pores sont mesurés par porosimétrie au mercure (Hg), à l'aide d'un porosimètre MICROMERITICS Autopore 9520, et sont calculés par la relation de WASHBURN avec un angle de contact théta égal à 130° et une tension superficielle gamma égale à 484 Dynes/cm (norme DIN 66133). La préparation de chaque échantillon se fait comme suit : chaque échantillon est préalablement séché pendant 2 heures en étuve à 200 °C.

Le rapport noté (R) est déterminé par la relation suivante :

$$(R) = N \times \frac{\left[\left(100 \times \frac{(C)}{C_T}\right) \times M_{Al}\right]}{\left((Al) \times M_{Ac}\right)},$$

dans laquelle :

- N est le nombre moyen de fonction carboxylique par acide polycarboxylique (par exemple, si tous les acides polycarboxyliques sont des acides dicarboxyliques (respectivement tricarboxyliques), N est égal à 2 (respectivement à 3)),
- (C) et (Al) sont les teneurs telles que définies ci-dessus,
- $C_T$ est la teneur en carbone du (des) acide(s) polycarboxylique(s),
- $M_{Al}$ est la masse moléculaire de l'aluminium,
- $M_{Ac}$ est la masse moléculaire du (des) acide(s) polycarboxylique(s).

La composante dispersive de l'énergie de surface $\gamma_s^d$ est déterminée par chromatographie gazeuse inverse. Un broyage de la silice est en général nécessaire quand elle se présente sous forme de granulés, suivi par un tamisage par exemple à 106 $\mu$m - 250 $\mu$m.

La technique utilisée pour calculer la composante dispersive de l'énergie de surface $\gamma_s^d$ est la Chromatographie Gazeuse Inverse à Dilution Infinie (CGI-DI), à 110°C en utilisant une série d'alcanes (normaux) allant de 6 à 10 atomes de carbone, une technique basée sur la chromatographie gazeuse, mais où le rôle de la phase mobile et de la phase stationnaire (remplissage) sont inversés. Ici, la phase stationnaire dans la colonne est remplacée par le matériau (solide) à analyser, ici la silice précipitée. Quant à la phase mobile, elle est constituée par le gaz vecteur (hélium) et des molécules "sondes" choisies en fonction de leur capacité d'interaction. Les mesures sont réalisées successivement avec chaque molécule sonde. Pour chaque mesure, chaque molécule sonde est injectée dans la colonne, en très faible quantité (dilution infinie), en mélange avec du méthane. Le méthane est utilisé pour déterminer le t0, le temps mort de la colonne.

La soustraction de ce temps mort t0 au temps de rétention de la sonde injectée conduit au temps de rétention net ($t_N$) de celle-ci.

Ces conditions opératoires, propres à la dilution infinie, font que ces temps de rétention reflètent uniquement l'interactivité de l'échantillon vis-à-vis de ces molécules. Physiquement, $t_N$ correspond au temps moyen que la molécule sonde a passé au contact de la phase stationnaire (le solide analysé). Pour chaque molécule sonde injectée, trois temps de rétention net $t_N$ sont mesurés. La valeur moyenne et l'écart-type correspondant sont utilisés pour déterminer les volumes de rétention spécifique ($V_g^0$) en s'appuyant sur la relation suivante (formule [1]).

$$V_g^0 = \frac{D_c t_N}{M_S}.\frac{273,15}{T} \qquad \text{formule [1]}$$

Ce dernier correspond au volume de gaz vecteur (ramené à 0°C) nécessaire pour éluer la molécule sonde pour 1 gramme de phase stationnaire (solide examiné). Cette grandeur standard permet de comparer les résultats quel que soit le débit de gaz vecteur et la masse de phase stationnaire utilisée. La formule [1] fait appel à : *Ms*, la masse de solide dans la colonne, *Dc* le débit de gaz vecteur et *T* la température de mesure.

Le volume de rétention spécifique est ensuite utilisé pour accéder à *ΔGa*, la variation d'enthalpie libre d'adsorption de la sonde, selon la formule [2], avec R la constante universelle des gaz parfaits ($R = 8{,}314$ J·K$^{-1}$·mol$^{-1}$), sur le solide contenu dans la colonne.

$$\Delta G_a = RT.Ln(V_g^0) \qquad \text{formule [2]}$$

Cette grandeur *ΔGa* est le point de départ pour la détermination de la composante dispersive de l'énergie de surface ($\gamma_s^d$). Celle-ci est obtenue en traçant la droite représentant la variation d'enthalpie libre d'adsorption (*ΔGa*) en fonction du nombre de carbone $n_c$ des sondes n-alcanes tel qu'indiqué dans le tableau ci-dessous.

| Sondes n-alcanes | $n_c$ |
|---|---|
| n-hexane | 6 |
| n-heptane | 7 |
| n-octane | 8 |
| n-nonane | 9 |
| n-décane | 10 |

On peut alors déterminer la composante dispersive de l'énergie de surface $\gamma_s^d$ à partir de la pente *ΔGa(CH2)* de la droite des alcanes normaux, correspondant à l'enthalpie libre d'adsorption du groupe méthylène, obtenue pour une température de mesure de 110°C.

La composante dispersive de l'énergie de surface $\gamma_s^d$ est alors reliée à l'enthalpie libre d'adsorption *ΔGa(CH2)* du groupe méthylène (méthode Dorris et Gray, J. Colloid Interface Sci., 77 (180), 353-362) par la relation suivante :

$$\gamma_S^d = \frac{(\Delta G_a^{CH_2})^2}{4N_A^2.a_{CH_2}^2.\gamma_{CH_2}}$$

dans laquelle $N_A$ est le nombre d'Avogadro ($6{,}02.10^{23}$ mol$^{-1}$), $a_{CH_2}$ l'aire occupée par un groupement méthylène adsorbée ($0{,}06$ nm$^2$) et $\gamma_{CH_2}$ l'énergie de surface d'un solide constitué uniquement de groupe méthylène et déterminée sur le polyéthylène ($35{,}6$ mJ/m$^2$ à 20 °C).

La coordinence de l'aluminium est déterminée par RMN solide de l'aluminium.

La technique utilisée pour mesurer la reprise en eau consiste généralement à placer, dans des conditions d'humidité relative données et pendant une durée prédéfinie, l'échantillon de silice préalablement séché ; la silice s'hydrate alors, ce qui fait passer la masse de l'échantillon d'une valeur initiale m (à l'état séché) à une valeur finale m + dm. On désigne spécifiquement par « reprise en eau » d'une silice, en particulier dans toute la suite de l'exposé, le rapport dm/m (c'est-à-dire la masse d'eau intégrée à l'échantillon rapportée à la masse de l'échantillon à l'état sec) exprimé en pourcentage calculé pour un échantillon de silice soumis aux conditions suivantes lors de la méthode de mesure :

- séchage préliminaire : 8 heures, à 150 °C ;
- hydratation : 24 heures, à 20 °C, et sous une humidité relative de 70 %.

Le protocole expérimental mis en œuvre consiste à successivement :

- peser exactement environ 2 grammes de la silice à tester ;
- sécher pendant 8 heures la silice ainsi pesée dans une étuve réglée à une température de 105 °C ;
- déterminer la masse m de la silice obtenue à l'issue de ce séchage ;
- disposer pendant 24 heures, à 20 °C, la silice séchée dans un récipient fermé tel qu'un dessicateur contenant un mélange eau / glycérine, de façon à ce que l'humidité relative du milieu fermé soit de 70 % ;
- déterminer la masse (m + dm) de la silice obtenue suite à ce traitement de 24 heures à 70 % d'humidité relative, la mesure de cette masse étant effectuée immédiatement après avoir sorti la silice du dessicateur, de manière à éviter une variation de la masse de la silice sous l'influence du changement d'hygrométrie entre le milieu à 70 % d'humidité relative et l'atmosphère du laboratoire.

L'aptitude à la dispersion et à la désagglomération des silices peut être quantifiée au moyen du test spécifique de désagglomération ci-dessous.

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), utilisé à 80 % de la puissance maximale, équipé d'une sonde de diamètre 19 mm. La mesure granulométrique est effectuée par diffraction laser sur un granulomètre MALVERN (Mastersizer 2000) en mettant en œuvre la théorie de Fraunhofer.

On introduit 2 grammes (+/- 0,1 gramme) de silice dans un bécher de 50 ml (hauteur : 7,5 cm et diamètre : 4,5 cm) et l'on complète à 50 grammes par ajout de 48 grammes (+/- 0,1 gramme) d'eau permutée. On obtient ainsi une suspension aqueuse à 4 % de silice.

On procède ensuite à la désagglomération sous ultra-sons pendant 7 minutes.

On réalise ensuite la mesure granulométrique en introduisant dans la cuve du granulomètre la totalité de la suspension homogénéisée.

Le diamètre médian $\varnothing_{50M}$ (ou diamètre médian Malvern), après désagglomération aux ultra-sons, est tel que 50 % des particules en volume ont une taille inférieure à $\varnothing_{50M}$ et 50 % ont une taille supérieure à $\varnothing_{50M}$. La valeur du diamètre médian $\varnothing_{50M}$ que l'on obtient est d'autant plus faible que la silice présente une aptitude à la désagglomération élevée.

Il est également possible de déterminer de la même façon le facteur de désagglomération Malvern $F_{DM}$ par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), utilisé à 80 % de la puissance maximale, équipé d'une sonde de diamètre 19 mm. La mesure granulométrique est effectuée par diffraction laser sur un granulomètre MALVERN (Mastersizer 2000) en mettant en œuvre la théorie de Fraunhofer.

On introduit 1 gramme (+/- 0,1 gramme) de silice dans un bécher de 50 ml (hauteur : 7,5 cm et diamètre : 4,5 cm) et l'on complète à 50 grammes par ajout de 49 grammes (+/- 0,1 gramme) d'eau permutée. On obtient ainsi une suspension aqueuse à 2 % de silice.

On procède ensuite à la désagglomération sous ultra-sons pendant 7 minutes.

On réalise ensuite la mesure granulométrique en introduisant dans la cuve du granulomètre la totalité de la suspension homogénéisée.

Ce facteur de désagglomération est déterminé par le rapport (10 x valeur de l'obscuration du laser bleu / valeur de l'obscuration du laser rouge), cette densité optique correspondant à la valeur réelle détectée par le granulomètre lors de l'introduction de la silice.

Ce rapport (facteur de désagglomération Malvern $F_{DM}$) est indicatif du taux de particules de taille inférieure à 0,1 $\mu$m qui ne sont pas détectées par le granulomètre. Ce rapport est d'autant plus élevé que la silice présente une aptitude à la désagglomération élevée.

Le pH est mesuré selon la méthode suivante dérivant de la norme ISO 787/9 (pH d'une suspension à 5 % dans l'eau) :

*Appareillage :*

- pHmètre étalonné (précision de lecture au 1/100$^e$)
- électrode de verre combinée
- bécher de 200 ml
- éprouvette de 100 ml
- balance de précision à 0,01 g près.

*Mode opératoire :*

5 grammes de silice sont pesées à 0,01 gramme près dans le bécher de 200 ml. 95 ml d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectuée.

La silice précipitée selon l'invention est caractérisée en ce qu'elle possède :

- une surface spécifique BET comprise entre 70 et 240 m$^2$/g, notamment entre 100 et 240 m$^2$/g,
- une surface spécifique CTAB comprise entre 70 et 240 m$^2$/g, notamment entre 100 et 240 m$^2$/g,
- une teneur (C) en acide polycarboxylique + carboxylate correspondant, exprimée en carbone total, d'au moins 0,15 % en poids, notamment d'au moins 0,20 % en poids,
- une teneur en aluminium (Al) d'au moins 0,9 % en poids, notamment d'au moins 1,0 % en poids.

La silice précipitée selon l'invention peut présenter une surface spécifique BET comprise entre 140 et 200 m$^2$/g, notamment entre 140 et 180 m$^2$/g.

La silice précipitée selon l'invention peut notamment présenter une surface spécifique CTAB comprise entre 140 et 200 m$^2$/g, notamment entre 140 et 180 m$^2$/g.

La silice précipitée selon l'invention peut notamment présenter une teneur (C) en acide polycarboxylique + carboxylate correspondant, exprimée en carbone total, d'au moins 0,24 % en poids, en particulier d'au moins 0,30 % en poids, par exemple d'au moins 0,35 % en poids, voire d'au moins 0,45 % en poids.

Elle présente généralement une teneur en acide polycarboxylique + carboxylate (C) d'au plus 10,00 % en poids, en particulier d'au plus 5,00 % en poids.

La silice précipitée selon l'invention peut notamment présenter une teneur en aluminium (Al) d'au moins 1,1 % en poids, en particulier d'au moins 1,2 % en poids. Elle présente généralement une teneur en aluminium (Al) inférieure à 10 % en poids, en particulier d'au plus 5 % en poids.

Une des caractéristiques de la silice précipitée selon l'invention peut résider dans la distribution, ou répartition de son volume poreux, et notamment dans la distribution du volume poreux qui est généré par les pores de diamètres inférieurs ou égaux à 400 Å. Ce dernier volume correspond au volume poreux utile des charges employées dans le renforcement des élastomères.

Ainsi, si la silice précipitée selon l'invention peut posséder une distribution poreuse telle que le volume poreux généré par les pores dont le diamètre est compris entre 175 et 275 Å (V2) représente moins de 60 %, de préférence moins de 55 %, par exemple moins de 50 %, du volume poreux généré par les pores de diamètres inférieurs ou égaux à 400 Å (V1).

La présence des acides polycarboxyliques et/ou des carboxylates correspondants aux acides polycarboxyliques à la surface de la silice selon l'invention peut être illustrée par la présence d'épaulements caractéristiques des liaisons C-O et C=O, visibles sur les spectres Infrarouge, obtenus notamment par Infrarouge de surface (transmission) ou ATR-diamant (en particulier entre 1540 et 1590 cm$^{-1}$ et entre 1380 et 1420 cm$^{-1}$ pour C-O, et entre 1700 et 1750 cm$^{-1}$ pour C=O).

En général la silice précipitée selon l'invention présente à sa surface des molécules de l' (des) acide(s) polycarboxylique(s) précité(s), en particulier des acides polycarboxyliques des mélanges précités, et/ou du (des) carboxylate(s) correspondant à l' (aux) acide(s) polycarboxylique(s) précité(s), en particulier correspondant aux acides polycarboxyliques des mélanges précités.

Par exemple, elle peut présenter à sa surface :

- des molécules d'acide adipique sous forme acide et/ou sous forme carboxylate, et

- des molécules d'acide glutarique sous forme acide et/ou sous forme carboxylate, et
- des molécules d'acide succinique sous forme acide et/ou sous forme carboxylate.

Par exemple, elle peut présenter à sa surface :

- des molécules d'acide méthylglutarique sous forme acide et/ou sous forme carboxylate, et
- des molécules d'acide éthylsuccinique sous forme acide et/ou sous forme carboxylate, et
- des molécules d'acide adipique sous forme acide et/ou sous forme carboxylate.

La silice précipitée selon cette variante de l'invention possède de préférence un rapport (R) compris entre 0,10 et 3,50, notamment entre 0,10 et 2,00, en particulier compris entre 0,15 et 1,50, par exemple entre 0,20 et 0,80.

De préférence, la silice selon l'invention présente une composante dispersive de l'énergie de surface $\gamma_s^d$ inférieure à 70 mJ/m$^2$, notamment inférieure à 65 mJ/m$^2$, par exemple inférieure à 50 mJ/m$^2$.

En outre, la silice précipitée selon l'invention peut posséder une répartition de la coordinence de l'aluminium spécifique, déterminée par RMN solide de l'aluminium. En général, au plus 85 % en nombre, notamment au plus 80 % en nombre, en particulier entre 70 et 85 % en nombre, par exemple entre 70 et 80 % en nombre, des atomes d'aluminium de la silice selon l'invention, peuvent présenter une coordinence tétraédrique, c'est-à-dire peuvent être en site tétraédrique. En particulier entre 15 et 30 % en nombre, par exemple entre 20 et 30 % en nombre, des atomes d'aluminium de la silice selon l'invention, peuvent présenter une coordinence pentaédrique et octaédrique, c'est-à-dire peuvent être en site pentaédrique ou octaédrique.

La silice précipitée selon l'invention peut présenter une reprise en eau supérieure à 6,0 %, en particulier supérieure à 7,0 %, notamment supérieure à 7,5 %, par exemple supérieur à 8,0 %, voire supérieure à 8,5 %.

En général, la silice précipitée selon l'invention présente une aptitude à la dispersion (notamment dans les élastomères) et à la désagglomération élevée.

La silice précipitée selon l'invention peut présenter un diamètre médian $\varnothing_{50M}$ après désagglomération aux ultra-sons inférieur 5,0 $\mu$m, en particulier inférieur à 4,5 $\mu$m, par exemple compris entre 2,0 et 4,5 $\mu$m.

La silice précipitée selon l'invention peut présenter un facteur de désagglomération aux ultra-sons $F_{DM}$ peut être supérieur à 5,5 ml, en particulier supérieur à 10,0 ml, par exemple supérieur à 12,0 ml.

La silice précipitée selon l'invention présente, généralement, un pH compris entre 5,0 et 8,5, de préférence compris entre 5,5 et 8,0.

L'état physique dans lequel se présente la silice précipitée selon l'invention peut être quelconque, c'est-à-dire qu'elle peut se présenter sous forme de billes sensiblement sphériques (microperles), de poudre ou de granulés.

Elle peut ainsi se présenter sous forme de billes sensiblement sphériques de taille moyenne d'au moins 80 $\mu$m, de préférence d'au moins 150 $\mu$m, en particulier comprise entre 150 et 270 $\mu$m ; cette taille moyenne est déterminée selon la norme NF X 11507 (décembre 1970) par tamisage à sec et détermination du diamètre correspondant à un refus cumulé de 50 %.

Elle peut également se présenter sous forme de poudre de taille moyenne d'au moins 3 $\mu$m, en particulier d'au moins 10 $\mu$m, de préférence d'au moins 15 $\mu$m.

Elle peut se présenter sous forme de granulés (en général de forme sensiblement parallélépipédique) de taille d'au moins 1 mm, par exemple comprise entre 1 et 10 mm, notamment selon l'axe de leur plus grande dimension (longueur).

La silice selon l'invention est de préférence obtenue par le procédé décrit précédemment.

De manière avantageuse, les silices précipitées selon la présente invention ou (susceptibles d'être) obtenues par le procédé selon l'invention précédemment décrit confèrent aux compositions de polymère(s) (élastomère(s)) dans lesquelles elles sont introduites, un compromis de propriétés très satisfaisant, notamment une réduction de leur viscosité et de préférence une amélioration de leurs propriétés dynamiques tout en conservant leurs propriétés mécaniques. Elles permettent ainsi de manière avantageuse une amélioration du compromis mise en œuvre / renforcement / propriétés hystérétiques. De manière préférée, elles présentent une bonne aptitude à la dispersion et à la désagglomération dans les compositions de polymère(s) (élastomère(s)).

Les silices précipitées selon la présente invention ou (susceptibles d'être) obtenues par le procédé selon l'invention précédemment décrit peuvent être utilisées dans de nombreuses applications.

Elles peuvent être employées par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant, elles trouvent une application particulièrement intéressante dans le renforcement des polymères, naturels ou synthétiques.

Les compositions de polymère(s) dans lesquelles elles peuvent être employées, notamment à titre de charge renforçante, sont en général à base d'un ou plusieurs polymères ou copolymères (notamment bipolymères ou terpolymères), en particulier d'un ou plusieurs élastomères, présentant, de préférence, au moins une température de transition vitreuse comprise entre -150 et +300 °C, par exemple entre -150 et + 20 °C.

A titre de polymères possibles, on peut mentionner notamment les polymères diéniques, en particulier les élastomères diéniques.

Par exemple, on peut utiliser les polymères ou copolymères (notamment bipolymères ou terpolymères) dérivant de monomères aliphatiques ou aromatiques, comprenant au moins une insaturation (tels que, notamment, l'éthylène, le propylène, le butadiène, l'isoprène, le styrène, l'acrylonitrile, l'isobutylène, l'acétate de vinyle), le polyacrylate de butyle, ou leurs mélanges ; on peut également citer les élastomères silicones, les élastomères fonctionnalisés, par exemple par des groupements chimiques disposés tout le long de la chaîne macromoléculaire et/ou en une ou plusieurs de ses extrémités (par exemple par des fonctions susceptibles de réagir avec la surface de la silice) et les polymères halogénés. On peut mentionner les polyamides et les polymères fluorés (tels que le polyfluorure de vinylidène).

On peut également mentionner les polymères thermoplastiques tels que le polyéthylène.

Le polymère (copolymère) peut être un polymère (copolymère) en masse, un latex de polymère (copolymère) ou bien une solution de polymère (copolymère) dans l'eau ou dans tout autre liquide dispersant approprié.

A titre d'élastomères diéniques, on peut mentionner par exemple les polybutadiènes (BR), les polyisoprènes (IR), les copolymères de butadiène, les copolymères d'isoprène, ou leurs mélanges, et en particulier les copolymères de styrène-butadiène (SBR, notamment ESBR (émulsion) ou SSBR (solution)), les copolymères d'isoprène-butadiène (BIR), les copolymères d'isoprène-styrène (SIR), les copolymères d'isoprène-butadiène-styrène (SBIR), les terpolymères éthylène-propylène-diène (EPDM) ainsi que les polymères fonctionnalisés associés (présentant par exemple des groupements polaires inclus dans la chaîne, pendant ou en bout de chaine et pouvant interagir avec la silice).

On peut également citer le caoutchouc naturel (NR) et le caoutchouc naturel époxydé (ENR).

Les compositions de polymère(s) peuvent être vulcanisées au soufre (on obtient alors des vulcanisats) ou réticulées notamment aux peroxydes ou autres systèmes de réticulation (par exemple diamines ou résines phénoliques).

En général, les compositions de polymère(s) comprennent en outre au moins un agent de couplage (silice/polymère) et/ou au moins un agent de recouvrement ; elles peuvent également comprendre, entre autres, un agent antioxydant.

On peut notamment utiliser comme agents de couplages, à titre d'exemples non limitatifs, des silanes polysulfurés, dits « symétriques » ou « asymétriques » ; on peut citer plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-(triméthoxysilyl)propyl) ou les polysulfures de bis(3-(triéthoxysilyl)propyl), tels que le tétrasulfure de triéthoxysilylpropyle. On peut également citer le tétrasulfure de monoéthoxydiméthylsilylpropyle. On peut également citer des silanes à fonction thiols masqués ou non, à fonction amines.

L'agent de couplage peut être préalablement greffé sur le polymère.

Il peut être également employé à l'état libre (c'est-à-dire non préalablement greffé) ou greffé à la surface de la silice. Il en est de même de l'éventuel agent de recouvrement.

A l'agent de couplage peut éventuellement être associé un « activateur de couplage » approprié, c'est-à-dire un composé qui, mélangé avec cet agent de couplage, augmente l'efficacité de ce dernier.

La proportion en poids de silice dans la composition de polymère(s) peut varier dans une gamme assez large. Elle représente habituellement 0,1 à 3,0 fois en poids, en particulier 0,1 à 2,0 fois en poids, notamment 0,2 à 1,5 fois en poids, par exemple 0,2 à 1,2 fois en poids, voire 0,3 à 0,8 fois en poids de la quantité du (des) polymère(s).

La silice selon l'invention peut avantageusement constituer la totalité de la charge inorganique renforçante, et même la totalité de la charge renforçante, de la composition de polymère(s).

Cependant, à cette silice selon l'invention peut être éventuellement associée au moins une autre charge renforçante, comme en particulier une silice hautement dispersible commerciale telle que par exemple la Z1165MP, la Z1115MP, une silice précipitée traitée (par exemple « dopée » à l'aide d'un cation comme l'aluminium ou traitée avec un agent de couplage tel qu'un silane) ; une autre charge inorganique renforçante telle que par exemple l'alumine, voire même une charge organique renforçante, notamment du noir de carbone (éventuellement recouvert d'une couche inorganique, par exemple de silice). La silice selon l'invention constitue alors de préférence au moins 50 %, voire au moins 80 % en poids de la totalité de la charge renforçante.

On peut citer, comme exemples non limitatifs d'articles finis comprenant au moins une (en particulier à base) desdites compositions de polymère(s) décrites précédemment (notamment à base des vulcanisats mentionnés ci-dessus), les semelles de chaussures (de préférence en présence d'un agent de couplage (silice/polymère), par exemple le tétrasulfure de triéthoxysilylpropyle), les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les séparateurs de batterie, les bandes de convoyeur, les courroies de transmissions, ou, de préférence, les pneumatiques, en particulier les bandes de roulement de pneumatiques (notamment pour véhicules légers ou pour véhicules poids lourds (camions par exemple)).

Les exemples suivants illustrent l'invention sans toutefois en limiter la portée.

EXEMPLES

EXEMPLE 1

Dans un réacteur en acier inoxydable muni d'un système d'agitation par hélice et d'un chauffage par double enveloppe, on introduit :

- 65,7 litres d'eau,
- 1,27 kg de $Na_2SO_4$ (électrolyte),
- 40,2 kg de silicate (rapport pondéral $SiO_2/NaO_2$ égal à 3,42) présentant une densité à 20 °C égale à 1,230 ± 0,006.

La solution est portée à 82 °C. Sous agitation, on introduit alors dans le mélange, de l'acide sulfurique (concentration massique égale à 7,7 %) jusqu'à ce que le pH du milieu réactionnel atteigne une valeur de 8,0 à un débit de 835 g/min pendant 20 minutes, puis à un débit de 1502 g/min pendant 15 minutes. Dans le même temps, la température du mélange est augmentée jusqu'à 92 °C.

Une fois l'acidification achevée, on introduit simultanément dans le milieu réactionnel, pendant 20 minutes, du silicate de sodium du type décrit ci-avant à un débit de 485 g/min, de l'aluminate de sodium (teneur en $Al_2O_3$ = 20,5 +/- 0,5 % ; teneur en $Na_2O_3$ = 19,4 +/- 0,4 %) à un débit de 54,8 g/min et de l'acide sulfurique (concentration massique égale à 7,7 %) à un débit régulé de manière à amener puis maintenir le pH du milieu réactionnel à une valeur de 8,0.

Après 20 minutes d'addition simultanée, on arrête l'introduction du silicate de sodium et de l'aluminate de sodium et on continue à introduire de l'acide sulfurique en augmentant le débit à 692 g/min de manière à amener le pH du milieu réactionnel à une valeur égale à 6,0.

La durée totale de la réaction est de 61 minutes.

On obtient ainsi à l'issue de la réaction une bouillie réactionnelle de silice précipitée qui est filtrée et lavée au moyen d'un filtre-presse de telle sorte que l'on récupère un gâteau de silice ayant un taux de matière sèche de 23 % en poids.

EXEMPLE 2

Une partie du gâteau de filtration obtenu à l'exemple 1 (6070 grammes) est ensuite soumis à une opération de délitage.

Lors de l'opération de délitage, on utilise une solution d'un mélange MGA à 34 % massique (mélange d'acides polycarboxyliques : 94,8 % en poids d'acide méthylglutarique, 4,9 % en poids d'anhydride éthylsuccinique, 0,2 % en poids d'acide adipique, 0,1 % autres).

On fait donc subir au gâteau obtenu à l'étape de filtration une opération de délitage dans un réacteur fortement agité continu avec ajout simultané au gâteau de 35,6 grammes d'une solution d'aluminate de sodium (rapport pondéral $Al/SiO_2$ de 0,3 %) et de 46,9 grammes de la solution de MGA (rapport pondéral mélange MGA / $SiO_2$ de 1,0 %).

Ce gâteau délité (ayant un extrait sec de 22 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 135 °C
Débit moyen : 15 l/h.

Les caractéristiques de la silice S1 obtenue (sous forme de billes sensiblement sphériques) sont alors les suivantes :

| | |
|---|---|
| BET ($m^2$/g) | 151 |
| Teneur en acide polycarboxylique + carboxylate (C) (%) | 0,37 |
| Teneur en aluminium (Al) (%) | 1,4 |
| Rapport (R) | 0,19 |
| CTAB ($m^2$/g) | 161 |
| $\gamma_s^d$ ($mJ/m^2$) | 63,4 |

(suite)

| | |
|---|---|
| V2/V1 (%) | 42,0 |
| Reprise en eau (%) | 10,2 |
| $\emptyset_{50M}$ ($\mu$m) après désagglomération aux ultra-sons | 2,0 |
| $F_{DM}$ après désagglomération aux ultra-sons | 18,6 |
| pH | 7,54 |

EXEMPLE 3

Une partie du gâteau de filtration obtenu à l'exemple 1 (6030 grammes) est ensuite soumis à une opération de délitage.

Lors de l'opération de délitage, on utilise une solution d'un mélange MGA à 34 % massique (mélange d'acides polycarboxyliques : 94,8 % en poids d'acide méthylglutarique, 4,9 % en poids d'anhydride éthylsuccinique, 0,2 % en poids d'acide adipique, 0,1 % autres).

On fait subir au gâteau obtenu à l'étape de filtration une opération de délitage dans un réacteur fortement agité continu avec ajout au gâteau de 6,4 grammes de la solution de MGA (rapport pondéral mélange MGA / $SiO_2$ de 1 %).

Ce gâteau délité (ayant un extrait sec de 22 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

    Température d'entrée moyenne : 300 °C
    Température de sortie moyenne : 130 °C
    Débit moyen : 15 l/h.

Les caractéristiques de la silice S2 obtenue (sous forme billes sensiblement sphériques) sont alors les suivantes :

| | |
|---|---|
| BET ($m^2$/g) | 148 |
| Teneur en acide polycarboxylique + carboxylate (C) (%) | 0,41 |
| Teneur en aluminium (Al) (%) | 1,0 |
| Rapport (R) | 0,3 |
| CTAB ($m^2$/g) | 152 |
| $\gamma_s^d$ (mJ/$m^2$) | 44,6 |
| V2/V1 (%) | 50,8 |
| Reprise en eau (%) | 10,0 |
| $\emptyset_{50M}$ ($\mu$m) après désagglomération aux ultra-sons | 4,1 |
| $F_{DM}$ après désagglomération aux ultra-sons | 15,8 |
| pH | 5,88 |

EXEMPLE 4 (Comparatif)

Une partie du gâteau de filtration obtenu à l'exemple 1 (6020 grammes) est ensuite soumis à une opération de délitage.

On fait subir au gâteau obtenu à l'étape de filtration une opération de délitage dans un réacteur fortement agité continu avec ajout au gâteau de 77,7 grammes d'une solution d'acide sulfurique à 7,7 % massique.

Ce gâteau délité (ayant un extrait sec de 22 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 135 °C
Débit moyen : 15 l/h.

Les caractéristiques de la silice C1 obtenue (sous forme de billes sensiblement sphériques) sont alors les suivantes :

| | |
|---|---|
| BET ($m^2$/g) | 177 |
| Teneur en acide polycarboxylique + carboxylate (C) (%) | - |
| Teneur en aluminium (Al) (%) | 1,1 |
| Rapport (R) | 0,0 |
| CTAB ($m^2$/g) | 157 |
| $\gamma_s^d$ (mJ/$m^2$) | 97,5 |
| V2/V1 (%) | 46,5 |
| Reprise en eau (%) | 10,4 |
| $\emptyset_{50M}$ ($\mu$m) après désagglomération aux ultra-sons | 1,9 |
| $F_{DM}$ après désagglomération aux ultra-sons | 18,3 |
| pH | 6,91 |

EXEMPLE 5

Dans un mélangeur interne de type Haake (380 ml), on prépare les compositions élastomériques dont la constitution, exprimée en partie en poids pour 100 parties d'élastomères (pce), est indiquée dans le tableau I ci-dessous :

Tableau I

| Composition | Témoin 1 | Composition 1 | Composition 2 |
|---|---|---|---|
| NR (1) | 100 | 100 | 103 |
| Silice C1 (2) | 55 | | |
| Silice S1 (3) | | 55 | |
| Silice S2 (4) | | | 55 |
| Agent de couplage (5) | 4,4 | 4,4 | 4,4 |
| ZnO | 3 | 3 | 3 |
| Acide stéarique | 2,5 | 2,5 | 2,5 |
| Antioxydant 1 (6) | 1,5 | 1,5 | 1,5 |
| Antioxydant 2 (7) | 1 | 1 | 1 |
| Noir de carbone (N330) | 3 | 3 | 3 |
| CBS (8) | 1,9 | 1,9 | 1,9 |
| TBzTD (9) | 0,2 | 0,2 | 0,2 |
| Soufre | 1,5 | 1,5 | 1,5 |

(1) Caoutchouc naturel SMR - CV60 (fourni par la société Safic-Alcan)
(2) Silice C1 (délitage avec addition d'acide sulfurique (exemple 4 - comparatif))
(3) Silice S1 selon la présente invention (délitage avec addition simultanée d'aluminate de sodium et d'un mélange d'acides MGA (exemple 2 ci-dessus))
(4) Silice S2 selon la présente invention (délitage avec addition d'un mélange d'acides MGA (exemple 3 ci-dessus))
(5) TESPT (LUVOMAXX TESPT de la société LEHVOSS France sarl)
(6) N-1,3-diméthylbutyl-N-phényl-para-phénylènediamine (Santoflex 6-PPD de la société Flexsys)
(7) 2,2,4-triméthyl-1H-quinoline (Permanax TQ de la société Flexsys)
(8) N-cyclohexyl-2-benzothiazyl-sulfénamide (Rhénogran CBS-80 de la société RheinChemie)
(9) Disulfure de tétrabenzylthiurame (Rhénogran TBzTD-70 de la société RheinChemie)

Procédé de préparation des compositions élastomériques :

Le procédé de préparation des compositions de caoutchouc est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque Haake (capacité de 380 ml). Le coefficient de remplissage est de 0,6. La température initiale et la vitesse des rotors sont fixées à chaque fois de manière à atteindre des températures de tombée de mélange voisines de 130-160°C.

Décomposée ici en deux passes, la première phase permet d'incorporer dans une première passe, les élastomères puis la charge renforçante (introduction fractionnée) avec l'agent de couplage et l'acide stéarique. Pour cette passe, la durée est comprise entre 4 et 10 minutes.

Après refroidissement du mélange (température inférieure à 100°C), une seconde passe permet d'incorporer l'oxyde de zinc et les agents protecteurs/antioxydants (6-PPD notamment). La durée de cette passe est comprise entre 2 et 5 minutes.

Après refroidissement du mélange (température inférieure à 100°C), la seconde phase permet l'introduction du système de vulcanisation (soufre et accélérateurs, comme le CBS). Elle est réalisée sur un mélangeur à cylindres, préchauffé à 50°C. La durée de cette phase est comprise entre 2 et 6 minutes.

Chaque mélange final est ensuite calandré sous la forme de plaques d'épaisseur 2-3 mm.

Sur ces mélanges obtenus dits crus, une évaluation de leurs propriétés rhéologiques permet d'optimiser la durée et la température de vulcanisation.

Ensuite, les propriétés mécaniques et dynamiques des mélanges vulcanisés à l'optimum de cuisson (T98) sont mesurées.

Propriétés rhéologiques

- Viscosité des mélanges crus :

La consistance Mooney est mesurée sur les compositions à l'état cru à 100°C au moyen d'un rhéomètre MV 2000 ainsi que la détermination du taux de relaxation de contrainte Mooney selon la norme NF ISO 289.

La valeur du couple lue au bout de 4 minutes après un préchauffage d'une minute (Mooney Large (1+4) - à 100°C) est indiquée dans le tableau II. Le test est réalisé après confection des mélanges crus puis après un vieillissement durant 3 semaines à une température de 23 +/- 3°C.

Tableau II

| Références | | Témoin 1 | Composition 1 | Composition 2 |
|---|---|---|---|---|
| ML (1+4) - 100°C | Initial | 58 | 57 | 56 |
| Relaxation Mooney | Initial | 0,472 | 0,468 | 0,501 |
| ML (1+4) - 100°C | Après 21 jours (23 +/- 3°C) | 66 | 59 | 60 |
| Relaxation Mooney | Après 21 jours (23 +/- 3°C) | 0,401 | 0,468 | 0,459 |

On constate que la silice S1 et la silice S2 de la présente invention (Composition 1 et Composition 2) permettent de conserver les valeurs de la viscosité à cru initiale, par rapport au mélange témoin (Témoin 1).

On constate également que la silice S1 et la silice S2 de la présente invention (Composition 1 et Composition 2) permettent une réduction de la viscosité à cru réduite, par rapport au mélange témoin (Témoin 1), après 3 semaines de stockage.

Ce type de comportement dans le temps est très utile pour l'homme de l'art dans le cas de la mise en œuvre de mélanges caoutchouc contenant de la silice.

- Rhéométrie des compositions :

Les mesures sont réalisées sur les compositions à l'état cru. On a porté dans le tableau III les résultats concernant le test de rhéologie qui est conduit à 150°C au moyen d'un rhéomètre ODR MONSANTO selon la norme NF ISO 3417.

Selon ce test, la composition à tester est placée dans la chambre d'essai régulée à la température de 150°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :

- le couple minimum (Cmin) qui reflète la viscosité de la composition à la température considérée ;
- le couple maximum (Cmax) ;
- le delta-couple (ΔC = Cmax - Cmin) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation) ;
- et le temps de grillage TS2 correspondant au temps nécessaire pour avoir une remontée de 2 points au-dessus du couple minimum à la température considérée (150°C) et qui reflète le temps pendant lequel il est possible de mettre en œuvre les mélanges crus à cette température sans avoir d'initiation de la vulcanisation (le mélange durcit à partir de TS2).

Les résultats obtenus sont indiqués dans le tableau III.

Tableau III

| Compositions | Témoin 1 | Composition 1 | Composition 2 |
|---|---|---|---|
| Cmin (dN.m) | 13,2 | 11,8 | 12,0 |
| Cmax (dN.m) | 84,9 | 86,9 | 86,5 |
| Delta couple (dN.m) | 71,7 | 75,1 | 74,5 |
| TS2 (min) | 6,9 | 7,8 | 7,7 |
| T98 (min) | 12,5 | 15,1 | 14,3 |

On constate que l'utilisation de la silice S1 et de la silice S2 de la présente invention (Composition 1 et Composition 2) permet de réduire la viscosité minimale (signe d'une amélioration de la viscosité à cru) par rapport au mélange témoin (Témoin 1) sans pénaliser le comportement en vulcanisation.

On constate également que l'utilisation de la silice S1 et de la silice S2 de la présente invention (Composition 1 et Composition 2) permet l'amélioration du temps de grillage TS2 par rapport au mélange témoin (Témoin 1).

Propriétés mécaniques des vulcanisats :

Les mesures sont réalisées sur les compositions vulcanisées à l'optimum (T98) pour une température de 150°C.

Les essais de traction uni-axiale sont réalisés conformément aux indications de la norme NF ISO 37 avec des éprouvettes de type H2 à une vitesse de 500 mm/min sur un appareil INSTRON 5564. Les modules x %, correspondant à la contrainte mesurée à x % de déformation en traction, et la résistance à la rupture sont exprimés en MPa ; l'allongement à la rupture est exprimé en %. Il est possible de déterminer un indice de renforcement (I.R.) qui est égal au rapport entre le module à 300 % de déformation et le module à 100% de déformation.

La mesure de dureté Shore A des vulcanisats est réalisée selon les indications de la norme ASTM D 2240. La valeur donnée est mesurée à 15 secondes.

Les propriétés mesurées sont rassemblées dans le tableau IV.

Tableau IV

| Compositions | Témoin 1 | Composition 1 | Composition 2 |
|---|---|---|---|
| Module 10 % (MPa) | 0,8 | 0,9 | 0,8 |
| Module 100 % (MPa) | 3,5 | 4,0 | 3,7 |
| Module 300 % (MPa) | 14,8 | 15,9 | 15,5 |
| Résistance rupture (MPa) | 29,0 | 29,4 | 29,3 |
| Allongement à la rupture (%) | 523 | 516 | 525 |

(suite)

| Compositions | Témoin 1 | Composition 1 | Composition 2 |
|---|---|---|---|
| I.R. | 4,2 | 4,0 | 4,2 |
| Dureté Shore A-15s (pts) | 70 | 70 | 69 |

On constate que les compositions issues de l'invention (Composition 1 et Composition 2) présentent un bon compromis de propriétés mécaniques par rapport à ce qui est obtenu avec le mélange témoin.

L'utilisation de la silice S1 et de la silice S2 de la présente invention (Composition 1 et Composition 2) permet d'améliorer les valeurs du module 300 % en gardant un niveau de renforcement équivalent au mélange témoin (Témoin 1) sans pénaliser les propriétés de résistance et d'allongement à la rupture.

Propriétés dynamiques des vulcanisats :

Les propriétés dynamiques sont mesurées sur un viscoanalyseur (Metravib VA3000), selon la norme ASTM D5992.

Les valeurs de facteur de perte (tan $\delta$) et de module complexe en compression dynamique (E*) sont enregistrées sur des échantillons vulcanisés (éprouvette cylindrique de section 95 mm$^2$ et de hauteur 14 mm). L'échantillon est soumis au départ à une pré-déformation de 10 % puis à une déformation sinusoïdale en compression alternée de +/- 2%. Les mesures sont réalisées à 60°C et à une fréquence de 10 Hz.

Les valeurs du facteur de perte (tan $\delta$ max retour) sont enregistrées sur des échantillons vulcanisés (éprouvette parallélépipédique de section 8 mm$^2$ et de hauteur 7 mm). L'échantillon est soumis à une déformation sinusoïdale en double cisaillement alternée à une température de 60°C et à une fréquence de 10 Hz. Les processus de balayage en amplitude de déformations s'effectuent selon un cycle aller-retour, allant de 0,1% à 50% puis retour de 50% à 0,1%.

Les résultats, présentés dans le tableau V, sont ainsi le module complexe en compression (E* - 60°C - 10 Hz) et le facteur de perte (tan $\delta$ - 60°C - 10 Hz).

Tableau V

| Compositions | Témoin 1 | Composition 1 | Composition 2 |
|---|---|---|---|
| E* - 60°C - 10 Hz (MPa) | 9,1 | 8,9 | 8,9 |
| Tan $\delta$ - 60°C - 10 Hz | 0,080 | 0,080 | 0,082 |
| Tan $\delta$ max retour - 60°C - 10 Hz | 0,133 | 0,121 | 0,119 |

L'utilisation d'une silice S1 et d'une silice S2 de la présente invention (Composition 1 et Composition 2) permet d'améliorer la valeur maximale du facteur de perte par rapport au mélange témoin (Témoin 1) sans pénaliser les autres propriétés dynamiques.

L'examen des différents tableaux II à V montre que les compositions conformes à l'invention (Composition 1 et Composition 2) permettent d'obtenir un bon compromis mise en œuvre / renforcement / propriétés hystérétiques par rapport à la composition témoin (Témoin 1).

## Revendications

1. Silice précipitée, **caractérisée en ce qu'**elle possède :

- une surface spécifique BET comprise entre 70 et 240 m$^2$/g, notamment entre 100 et 240 m$^2$/g,
- une surface spécifique CTAB comprise entre 70 et 240 m$^2$/g, notamment entre 100 et 240 m$^2$/g,
- une teneur C en acide polycarboxylique + carboxylate correspondant, exprimée en carbone total, d'au moins 0,15 % en poids, notamment d'au moins 0,20 % en poids,
- une teneur en aluminium (Al) d'au moins 0,9 % en poids, notamment d'au moins 1,0 % en poids,

une distribution poreuse telle que le volume poreux généré par les pores dont le diamètre est compris entre 175 et 275 Å représente moins de 50 % du volume poreux généré par les pores de diamètres inférieurs ou égaux à 400 Å, et **en ce que** ledit acide polycarboxylique est choisi parmi les acides polycarboxyliques linéaires ou ramifiés, saturés ou insaturés, aliphatiques ayant de 2 à 20 atomes de carbone ou aromatiques.

2. Silice précipitée selon la revendication 1 **caractérisé en ce que** ledit acide polycarboxylique est choisi dans le groupe constitué par l'acide malonique, l'acide tricarballylique, l'acide glutarique, l'acide adipique, l'acide pimélique, l'acide subérique, l'acide azélaïque, l'acide sébacique, l'acide méthylsuccinique, l'acide éthylsuccinique, l'acide oxalosuccinique, l'acide méthyladipique, l'acide méthylglutarique, l'acide diméthylglutarique, l'acide fumarique, l'acide itaconique, l'acide muconique, l'acide aconitique, l'acide traumatique et l'acide glutaconique, l'acide malique, l'acide citrique, l'acide isocitrique et l'acide tartarique, l'acide phtalique, l'acide orthophtalique, l'acide isophtalique, l'acide trimésique et l'acide trimellitique.

3. Silice précipitée selon la revendication 1 **caractérisé en ce que** ledit acide polycarboxylique est un mélange d'acides polycarboxyliques comprenant acide adipique, acide glutarique et acide succinique.

4. Silice précipitée selon la revendication 1 **caractérisé en ce que** ledit acide polycarboxylique est un mélange d'acides polycarboxyliques comprenant acide méthylglutarique, acide éthylsuccinique et acide adipique.

5. Procédé de préparation de la silice précipitée selon l'une des revendications 1 à 4, ledit procédé étant du type comprenant la réaction de précipitation entre un silicate et un agent acidifiant ce par quoi l'on obtient une suspension de silice précipitée, **caractérisé en ce qu'**il comprend les étapes suivantes :

- on réalise la réaction de précipitation de la manière suivante :

(i) on forme un pied de cuve initial comportant un silicate et un électrolyte, la concentration en silicate, exprimée en $SiO_2$, dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins 7,
(iii) on ajoute au milieu réactionnel, simultanément, de l'agent acidifiant et un silicate,

- on filtre la suspension de silice obtenue,
- on soumet le gâteau de filtration obtenu à l'issue de la filtration à une opération de délitage,
- on sèche le gâteau de filtration ainsi obtenu, de préférence présentant un taux de matière sèche d'au plus 25 %,

ledit procédé comprenant une des trois opérations (a), (b) ou (c) suivantes :

(a) on ajoute, après l'étape (iii), au milieu réactionnel au moins un composé A de l'aluminium et, ensuite ou simultanément, un agent basique,
(b) on ajoute, après l'étape (iii) ou à la place de l'étape (iii), au milieu réactionnel simultanément un silicate et au moins un composé A de l'aluminium,
(c) l'étape (iii) est réalisée en ajoutant simultanément au milieu réactionnel de l'agent acidifiant, un silicate et au moins un composé B de l'aluminium, et étant **caractérisé en ce qu'**on ajoute au gâteau de filtration, soit au cours de l'opération de délitage, soit après l'opération de délitage et avant l'étape de séchage, au moins un acide polycarboxylique choisi parmi les acides polycarboxyliques linéaires ou ramifiés, saturés ou insaturés, aliphatiques ayant de 2 à 20 atomes de carbone ou aromatiques.

6. Procédé selon la revendication 5, comprenant la réaction de précipitation entre un silicate et un agent acidifiant ce par quoi l'on obtient une suspension de silice précipitée, **caractérisé en ce qu'**il comprend les étapes suivantes :

- on réalise la réaction de précipitation de la manière suivante :

(i) on forme un pied de cuve initial comportant un silicate et un électrolyte, la concentration en silicate, exprimée en $SiO_2$, dans ledit pied de cuve initial étant inférieure à 100 g/L et la concentration en électrolyte dans ledit pied de cuve initial étant inférieure à 17 g/L,
(ii) on ajoute l'agent acidifiant audit pied de cuve jusqu'à l'obtention d'une valeur du pH du milieu réactionnel d'au moins 7,
(iii) on ajoute au milieu réactionnel simultanément de l'agent acidifiant et un silicate,

- puis on effectue les étapes suivantes :

21

(iv) on ajoute au milieu réactionnel simultanément au moins un composé A de l'aluminium et un agent basique, de préférence jusqu'à l'obtention d'une valeur du pH du milieu réactionnel comprise entre 6,5 et 10, en particulier entre 7,2 et 8,6, puis
(v) on ajoute au milieu réactionnel de l'agent acidifiant, de préférence jusqu'à l'obtention d'une valeur du pH du milieu réactionnel comprise entre 3 et 5, en particulier entre 3,4 et 4,5,

- on filtre la suspension de silice obtenue,
- on soumet le gâteau de filtration obtenu à l'issue de la filtration à une opération de délitage,
- on sèche le gâteau de filtration ainsi obtenu, de préférence présentant un taux de matière sèche d'au plus 25 %,

ledit procédé étant **caractérisé en ce qu'**on ajoute au gâteau de filtration, soit au cours de l'opération de délitage, soit après l'opération de délitage et avant l'étape de séchage, au moins un acide polycarboxylique.

**7.** Procédé selon la revendication 5, comprenant la réaction de précipitation entre un silicate et un agent acidifiant ce par quoi l'on obtient une suspension de silice précipitée, **caractérisé en ce qu'**il comprend les étapes suivantes :

- on réalise la réaction de précipitation de la manière suivante :

(i) on forme un pied de cuve initial comportant un silicate et un électrolyte, la concentration en silicate, exprimée en $SiO_2$, dans ledit pied de cuve initial étant inférieure à 100 g/L et la concentration en électrolyte dans ledit pied de cuve initial étant inférieure à 17 g/L,
(ii) on ajoute l'agent acidifiant audit pied de cuve jusqu'à l'obtention d'une valeur du pH du milieu réactionnel d'au moins 7,
(iii) on ajoute au milieu réactionnel simultanément un silicate et au moins un composé A de l'aluminium,

- on filtre la suspension de silice obtenue,
- on soumet le gâteau de filtration obtenu à l'issue de la filtration à une opération de délitage,
- on sèche le gâteau de filtration ainsi obtenu, de préférence présentant un taux de matière sèche d'au plus 25 %,

ledit procédé étant **caractérisé en ce qu'**on ajoute au gâteau de filtration, soit au cours de l'opération de délitage, soit après l'opération de délitage et avant l'étape de séchage, au moins un acide polycarboxylique.

**8.** Procédé selon la revendication 5, comprenant la réaction de précipitation entre un silicate et un agent acidifiant ce par quoi l'on obtient une suspension de silice précipitée, **caractérisé en ce qu'**il comprend les étapes suivantes :

- on réalise la réaction de précipitation de la manière suivante :

(i) on forme un pied de cuve initial comportant un silicate et un électrolyte, la concentration en silicate, exprimée en $SiO_2$, dans ledit pied de cuve initial étant inférieure à 100 g/L et la concentration en électrolyte dans ledit pied de cuve initial étant inférieure à 17 g/L,
(ii) on ajoute l'agent acidifiant audit pied de cuve jusqu'à l'obtention d'une valeur du pH du milieu réactionnel d'au moins 7,
(iii) on ajoute au milieu réactionnel simultanément de l'agent acidifiant, un silicate et au moins un composé B de l'aluminium,

- on filtre la suspension de silice obtenue,
- on soumet le gâteau de filtration obtenu à l'issue de la filtration à une opération de délitage,
- on sèche le gâteau de filtration ainsi obtenu, de préférence présentant un taux de matière sèche d'au plus 25 %,

ledit procédé étant **caractérisé en ce qu'**on ajoute au gâteau de filtration, soit au cours de l'opération de délitage, soit après l'opération de délitage et avant l'étape de séchage, au moins un acide polycarboxylique.

**9.** Procédé selon l'une des revendications 5 à 8, dans lequel l'opération de délitage comprend l'addition d'au moins un composé C de l'aluminium.

**10.** Procédé selon la revendication 9, dans lequel, au cours de l'opération de délitage, au moins un acide polycarboxylique et au moins composé C de l'aluminium sont simultanément ajoutés au gâteau de filtration.

11.  Procédé selon la revendication 9, dans lequel, au cours de l'opération de délitage, au moins un composé C de l'aluminium est ajouté au gâteau de filtration préalablement à l'ajout d'au moins un acide polycarboxylique.

12.  Procédé selon la revendication 9, dans lequel au moins un acide polycarboxylique est ajouté au gâteau de filtration après l'opération de délitage.

13.  Composition de polymères comprenant une silice précipitée selon l'une des revendications 1 à 4 .

14.  Article comprenant au moins une composition selon la revendication 13, cet article consistant en une semelle de chaussures, un revêtement de sols, une barrière aux gaz, un matériau ignifugeant, un galet de téléphérique, un joint d'appareils électroménagers, un joint de conduites de liquides ou de gaz, un joint de système de freinage, un tuyau, une gaine, un câble, un support de moteur, un séparateur de batterie, une bande de convoyeur, une courroie de transmissions, ou, un pneumatique.

**Patentansprüche**

1.  Gefälltes Siliciumdioxid, **dadurch gekennzeichnet, dass** es Folgendes besitzt:

    - eine spezifische BET-Oberfläche im Bereich von 70 bis 240 m$^2$/g, insbesondere von 100 bis 240 m$^2$/g,
    - eine spezifische CTAB-Oberfläche im Bereich von 70 bis 240 m$^2$/g, insbesondere von 100 bis 240 m$^2$/g,
    - einen Gehalt an Polycarbonsäure + entsprechendem Carboxylat, ausgedrückt als Gesamtkohlenstoff, von mindestens 0,15 Gewichts-%, insbesondere von mindestens 0,20 Gewichts-%,
    - einen Gehalt an Aluminium (Al) von mindestens 0,9 Gewichts-%, insbesondere von mindestens 1,0 Gewichts-%, eine Porenverteilung, die derart ist, dass das Porenvolumen, welches durch diejenigen Poren entsteht, deren Durchmesser im Bereich von 175 bis 275 Å liegt, weniger als 50 % des Porenvolumens ausmacht, welches durch diejenigen Poren entsteht, deren Durchmesser höchstens 400 Å betragen, und dadurch, dass die Polycarbonsäure aus den geradkettigen oder verzweigten, gesättigten oder ungesättigten, aliphatischen Polycarbonsäuren mit 2 bis 20 Kohlenstoffatomen, oder denjenigen aromatischer Beschaffenheit, ausgewählt ist.

2.  Gefälltes Siliciumdioxid nach Anspruch 1, **dadurch gekennzeichnet, dass** die Polycarbonsäure aus der Gruppe ausgewählt ist, die aus Malonsäure, Tricarballylsäure, Glutarsäure, Adipinsäure, Pimelinsäure, Suberinsäure, Azelainsäure, Sebacinsäure, Methylbernsteinsäure, Ethylbernsteinsäure, Oxalbernsteinsäure, Methyladipinsäure, Methylglutarsäure, Dimethylglutarsäure, Fumarsäure, Itaconsäure, Muconsäure, Aconitsäure, Traumatinsäure und Glutaconsäure, Äpfelsäure, Citronensäure, Isocitronensäure und Weinsäure, Phthalsäure, ortho-Phthalsäure, Isophthalsäure, Trimesinsäure und Trimellitsäure besteht.

3.  Gefälltes Siliciumdioxid nach Anspruch 1, **dadurch gekennzeichnet, dass** es sich bei der Polycarbonsäure um eine Mischung von Polycarbonsäuren handelt, die Adipinsäure, Glutarsäure und Bernsteinsäure umfasst.

4.  Gefälltes Siliciumdioxid nach Anspruch 1, **dadurch gekennzeichnet, dass** es sich bei der Polycarbonsäure um eine Mischung von Polycarbonsäuren handelt, die Methylglutarsäure, Ethylbernsteinsäure und Adipinsäure umfasst.

5.  Verfahren zur Herstellung des gefällten Siliciumdioxids nach einem der Ansprüche 1 bis 4, wobei das Verfahren derart beschaffen ist, dass es die Fällungsreaktion zwischen einem Silicat und einem Säuerungsmittel umfasst, um auf diese Weise eine Suspension von gefälltem Siliciumdioxid zu erhalten, **dadurch gekennzeichnet, dass** es die folgenden Schritte umfasst:

    - Durchführen der Fällungsreaktion auf die folgende Weise:

        (i) Bilden eines Ursprungsansatzes, der ein Silicat und einen Elektrolyten aufweist, wobei die Konzentration an Silicat, ausgedrückt als SiO$_2$, in dem Ursprungsansatz weniger als 100 g/L beträgt und die Konzentration an Elektrolyt in dem Ursprungsansatz weniger als 17 g/L beträgt,
        (ii) Zusetzen des Säuerungsmittels zu dem Ansatz, bis das Reaktionsmilieu einen pH-Wert von mindestens 7 erreicht hat,
        (iii) Zusetzen des Säuerungsmittels und eines Silicats, auf gleichzeitige Weise, zu dem Reaktionsmilieu,

    - Filtrieren der erhaltenen Suspension von Siliciumdioxid,

- Einwirkenlassen eines Auflockerungsvorgangs auf den Filterkuchen, der nach dem Filtrieren erhalten wurde,
- Trocknen des auf diese Weise erhaltenen Filterkuchens, welcher vorzugsweise einen Trockensubstanzgehalt von höchstens 25 % aufweist, wobei das Verfahren einen der drei folgenden Vorgänge (a), (b) oder (c) umfasst:

(a) nach dem Schritt (iii), Zusetzen mindestens einer Verbindung A von Aluminium sowie, anschließend oder auf gleichzeitige Weise, eines basischen Mittels zum Reaktionsmilieu,
(b) nach dem Schritt (iii) oder anstelle des Schrittes (iii), gleichzeitiges Zusetzen eines Silicats und mindestens einer Verbindung A von Aluminium zum Reaktionsmilieu,
(c) Durchführen des Schrittes (iii), indem gleichzeitig das Säuerungsmittel, ein Silicat und mindestens eine Verbindung B von Aluminium dem Reaktionsmilieu zugesetzt werden, und

wobei es **dadurch gekennzeichnet ist, dass** dem Filterkuchen entweder im Laufe des Auflockerungsvorgangs oder nach dem Auflockerungsvorgang und vor dem Trocknungsschritt mindestens eine Polycarbonsäure zugesetzt wird, die aus den geradkettigen oder verzweigten, gesättigten oder ungesättigten, aliphatischen Polycarbonsäuren mit 2 bis 20 Kohlenstoffatomen, oder denjenigen aromatischer Beschaffenheit, ausgewählt ist.

**6.** Verfahren nach Anspruch 5, wobei es die Fällungsreaktion zwischen einem Silicat und einem Säuerungsmittel umfasst, um auf diese Weise eine Suspension von gefälltem Siliciumdioxid zu erhalten, **dadurch gekennzeichnet, dass** es die folgenden Schritte umfasst:

- Durchführen der Fällungsreaktion auf die folgende Weise:

(i) Bilden eines Ursprungsansatzes, der ein Silicat und einen Elektrolyten aufweist, wobei die Konzentration an Silicat, ausgedrückt als $SiO_2$, in dem Ursprungsansatz weniger als 100 g/L beträgt und die Konzentration an Elektrolyt in dem Ursprungsansatz weniger als 17 g/L beträgt,
(ii) Zusetzen des Säuerungsmittels zu dem Ansatz, bis das Reaktionsmilieu einen pH-Wert von mindestens 7 erreicht hat,
(iii) Gleichzeitiges Zusetzen von Säuerungsmittel und eines Silicats zu dem Reaktionsmilieu,

- anschließendes Durchführen der folgenden Schritte:

(iv) Gleichzeitiges Zusetzen mindestens einer Verbindung A von Aluminium und eines basischen Mittels zu dem Reaktionsmilieu, vorzugsweise bis das Reaktionsmilieu einen pH-Wert erreicht, der im Bereich von 6,5 bis 10, insbesondere von 7,2 bis 8,6 liegt, woraufhin
(v) das Säuerungsmittel dem Reaktionsmilieu zugesetzt wird, vorzugsweise bis das Reaktionsmilieu einen pH-Wert erreicht, der im Bereich von 3 bis 5, insbesondere von 3,5 bis 4,5 liegt,

- Filtrieren der erhaltenen Suspension von Siliciumdioxid,
- Einwirkenlassen eines Auflockerungsvorgangs auf den Filterkuchen, der nach dem Filtrieren erhalten wurde,
- Trocknen des auf diese Weise erhaltenen Filterkuchens, welcher vorzugsweise einen Trockensubstanzgehalt von höchstens 25 % aufweist, wobei das Verfahren **dadurch gekennzeichnet ist, dass** dem Filterkuchen entweder im Verlauf des Auflockerungsvorgangs oder nach dem Auflockerungsvorgang und vor dem Trocknungsschritt mindestens eine Polycarbonsäure zugesetzt wird.

**7.** Verfahren nach Anspruch 5, wobei es die Fällungsreaktion zwischen einem Silicat und einem Säuerungsmittel umfasst, um auf diese Weise eine Suspension von gefälltem Siliciumdioxid zu erhalten, **dadurch gekennzeichnet, dass** es die folgenden Schritte umfasst:

- Durchführen der Fällungsreaktion auf die folgende Weise:

(i) Bilden eines Ursprungsansatzes, der ein Silicat und einen Elektrolyten aufweist, wobei die Konzentration an Silicat, ausgedrückt als $SiO_2$, in dem Ursprungsansatz weniger als 100 g/L beträgt und die Konzentration an Elektrolyt in dem Ursprungsansatz weniger als 17 g/L beträgt,
(ii) Zusetzen des Säuerungsmittels zu dem Ansatz, bis das Reaktionsmilieu einen pH-Wert von mindestens 7 erreicht hat,
(iii) gleichzeitiges Zusetzen eines Silicats und mindestens einer Verbindung A von Aluminium zu dem Reaktionsmilieu,

- Filtrieren der erhaltenen Suspension von Siliciumdioxid,
- Einwirkenlassen eines Auflockerungsvorgangs auf den Filterkuchen, der nach dem Filtrieren erhalten wurde,
- Trocknen des auf diese Weise erhaltenen Filterkuchens, welcher vorzugsweise einen Trockensubstanzgehalt von höchstens 25 % aufweist,

wobei das Verfahren **dadurch gekennzeichnet ist, dass** dem Filterkuchen entweder im Verlauf des Auflockerungsvorgangs oder nach dem Auflockerungsvorgang und vor dem Trocknungsschritt mindestens eine Polycarbonsäure zugesetzt wird.

8. Verfahren nach Anspruch 5, wobei es die Fällungsreaktion zwischen einem Silicat und einem Säuerungsmittel umfasst, um auf diese Weise eine Suspension von gefälltem Siliciumdioxid zu erhalten, **dadurch gekennzeichnet, dass** es die folgenden Schritte umfasst:

- Durchführen der Fällungsreaktion auf die folgende Weise:

(i) Bilden eines Ursprungsansatzes, der ein Silicat und einen Elektrolyten aufweist, wobei die Konzentration an Silicat, ausgedrückt als $SiO_2$, in dem Ursprungsansatz weniger als 100 g/L beträgt und die Konzentration an Elektrolyt in dem Ursprungsansatz weniger als 17 g/L beträgt,
(ii) Zusetzen des Säuerungsmittels zu dem Ansatz, bis das Reaktionsmilieu einen pH-Wert von mindestens 7 erreicht hat,
(iii) Gleichzeitiges Zusetzen des Säuerungsmittels, eines Silicats und mindestens einer Verbindung B von Aluminium zu dem Reaktionsmilieu,

- Filtrieren der erhaltenen Suspension von Siliciumdioxid,
- Einwirkenlassen eines Auflockerungsvorgangs auf den Filterkuchen, der nach dem Filtrieren erhalten wurde,
- Trocknen des auf diese Weise erhaltenen Filterkuchens, welcher vorzugsweise einen Trockensubstanzgehalt von höchstens 25 % aufweist,

wobei das Verfahren **dadurch gekennzeichnet ist, dass** dem Filterkuchen entweder im Verlauf des Auflockerungsvorgangs oder nach dem Auflockerungsvorgang und vor dem Trocknungsschritt mindestens eine Polycarbonsäure zugesetzt wird.

9. Verfahren nach einem der Ansprüche 5 bis 8, wobei der Auflockerungsvorgang das Hinzufügen mindestens einer Verbindung C von Aluminium umfasst.

10. Verfahren nach Anspruch 9, wobei dem Filterkuchen im Laufe des Auflockerungsvorgangs gleichzeitig mindestens eine Polycarbonsäure und mindestens eine Verbindung C von Aluminium zugesetzt werden.

11. Verfahren nach Anspruch 9, wobei dem Filterkuchen im Laufe des Auflockerungsvorgangs, vor dem Zusatz mindestens einer Polycarbonsäure, mindestens eine Verbindung C von Aluminium zugesetzt wird.

12. Verfahren nach Anspruch 9, wobei dem Filterkuchen nach dem Auflockerungsvorgang mindestens eine Polycarbonsäure zugesetzt wird.

13. Polymerzusammensetzung, die ein gefälltes Siliciumdioxid nach einem der Ansprüche 1 bis 4 umfasst.

14. Gegenstand, der mindestens eine Zusammensetzung nach Anspruch 13 umfasst, wobei dieser Gegenstand in einer Schuhsohle, einem Bodenbelag, einer Gassperrschicht, einem flammfesten Material, einer Seilbahnrolle, einer Dichtung elektrischer Haushaltsgeräte, einer Dichtung für Flüssigkeits- oder Gasleitungen, einer Bremssystemdichtung, einem Schlauch, einer Umhüllung, einem Kabel, einem Motorlager, einem Batterieseparator, einem Förderband, einem Übertragungsriemen oder einem Luftreifen besteht.

## Claims

1. Precipitated silica, **characterized in that** it has:

- a BET specific surface area of between 70 and 240 $m^2/g$, in particular between 100 and 240 $m^2/g$,

- a CTAB specific surface area of between 70 and 240 $m^2/g$, in particular between 100 and 240 $m^2/g$,
- a content C of polycarboxylic acid + corresponding carboxylate, expressed as total carbon, of at least 0.15% by weight, in particular of at least 0.20% by weight,
- an aluminium (Al) content of at least 0.9% by weight, in particular of at least 1.0% by weight,

a pore distribution such that the pore volume generated by the pores, the diameter of which is between 175 and 275 Å, represents less than 50% of the pore volume generated by the pores with diameters of less than or equal to 400 Å, and **in that** said polycarboxylic acid is chosen from linear or branched, saturated or unsaturated, aliphatic polycarboxylic acids containing from 2 to 20 carbon atoms or aromatic polycarboxylic acids.

2. Precipitated silica according to Claim 1, **characterized in that** said polycarboxylic acid is chosen from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid, traumatic acid and glutaconic acid, malic acid, citric acid, isocitric acid and tartaric acid, phthalic acid, orthophthalic acid, isophthalic acid, trimesic acid and trimellitic acid.

3. Precipitated silica according to Claim 1, **characterized in that** said polycarboxylic acid is a mixture of polycarboxylic acids comprising adipic acid, glutaric acid and succinic acid.

4. Precipitated silica according to Claim 1, **characterized in that** said polycarboxylic acid is a mixture of polycarboxylic acids comprising methylglutaric acid, ethylsuccinic acid and adipic acid.

5. Process for producing the precipitated silica according to one of Claims 1 to 4, said process being of the type comprising the precipitation reaction between a silicate and an acidifying agent, as a result of which a suspension of precipitated silica is obtained, **characterized in that** it comprises the following steps:

- the precipitation reaction is carried out in the following way:

(i) an initial vessel heel comprising a silicate and an electrolyte is formed, the concentration of silicate, expressed as $SiO_2$, in said initial vessel heel being less than 100 g/l and the concentration of electrolyte in said initial vessel heel being less than 17 g/l,
(ii) the acidifying agent is added to said vessel heel until a pH value of the reaction medium of at least 7 is obtained,
(iii) acidifying agent and a silicate are simultaneously added to the reaction medium,

- the silica suspension obtained is filtered,
- the filtration cake obtained at the end of the filtration is subjected to a disintegrating operation,
- the filtration cake thus obtained, preferably having a solids content of at most 25%, is dried, said process comprising one of the following three operations (a), (b) or (c):

(a) at least one aluminium compound A and, subsequently or simultaneously, a basic agent are added to the reaction medium, after step (iii),
(b) a silicate and at least one aluminium compound A are simultaneously added to the reaction medium, after step (iii) or in place of step (iii),
(c) step (iii) is carried out by simultaneously adding, to the reaction medium, acidifying agent, a silicate and at least one aluminium compound B,

and being **characterized in that** at least one polycarboxylic acid chosen from linear or branched, saturated or unsaturated, aliphatic polycarboxylic acids containing from 2 to 20 carbon atoms or aromatic polycarboxylic acids is added to the filtration cake, either during the disintegrating operation, or after the disintegrating operation and before the drying step.

6. Process according to Claim 5, comprising the precipitation reaction between a silicate and an acidifying agent, as a result of which a suspension of precipitated silica is obtained, **characterized in that** it comprises the following steps:

- the precipitation reaction is carried out in the following way:

(i) an initial vessel heel comprising a silicate and an electrolyte is formed, the concentration of silicate, expressed as $SiO_2$, in said initial vessel heel being less than 100 g/l and the concentration of electrolyte in said initial vessel heel being less than 17 g/l,

(ii) the acidifying agent is added to said vessel heel until a pH value of the reaction medium of at least 7 is obtained,

(iii) acidifying agent and a silicate are simultaneously added to the reaction medium,

- then the following steps are carried out:

(iv) at least one aluminium compound A and a basic agent are simultaneously added to the reaction medium, preferably until a pH value of the reaction medium of between 6.5 and 10, in particular between 7.2 and 8.6, is obtained, then

(v) acidifying agent is added to the reaction medium, preferably until a pH value of the reaction medium of between 3 and 5, in particular between 3.4 and 4.5, is obtained,

- the silica suspension obtained is filtered,
- the filtration cake obtained at the end of the filtration is subjected to a disintegrating operation,
- the filtration cake thus obtained, preferably having a solids content of at most 25%, is dried,

said process being **characterized in that** at least one carboxylic acid is added to the filtration cake, either during the disintegrating operation, or after the disintegrating operation and before the drying step.

7. Process according to Claim 5, comprising the precipitation reaction between a silicate and an acidifying agent, as a result of which a suspension of precipitated silica is obtained, **characterized in that** it comprises the following steps:

- the precipitation reaction is carried out in the following way:

(i) an initial vessel heel comprising a silicate and an electrolyte is formed, the concentration of silicate, expressed as $SiO_2$, in said initial vessel heel being less than 100 g/l and the concentration of electrolyte in said initial vessel heel being less than 17 g/l,

(ii) the acidifying agent is added to said vessel heel until a pH value of the reaction medium of at least 7 is obtained,

(iii) a silicate and at least one aluminium compound A are simultaneously added to the reaction medium,

- the silica suspension obtained is filtered,
- the filtration cake obtained at the end of the filtration is subjected to a disintegrating operation,
- the filtration cake thus obtained, preferably having a solids content of at most 25%, is dried, said process being **characterized in that** at least one polycarboxylic acid is added to the filtration cake, either during the disintegrating operation, or after the disintegrating operation and before the drying step.

8. Process according to Claim 5, comprising the precipitation reaction between a silicate and an acidifying agent, as a result of which a suspension of precipitated silica is obtained, **characterized in that** it comprises the following steps:

- the precipitation reaction is carried out in the following way:

(i) an initial vessel heel comprising a silicate and an electrolyte is formed, the concentration of silicate, expressed as $SiO_2$, in said initial vessel heel being less than 100 g/l and the concentration of electrolyte in said initial vessel heel being less than 17 g/l,

(ii) the acidifying agent is added to said vessel heel until a pH value of the reaction medium of at least 7 is obtained,

(iii) acidifying agent, a silicate and at least one aluminium compound B are simultaneously added to the reaction medium,

- the silica suspension obtained is filtered,
- the filtration cake obtained at the end of the filtration is subjected to a disintegrating operation,
- the filtration cake thus obtained, preferably having a solids content of at most 25%, is dried,

said process being **characterized in that** at least one polycarboxylic acid is added to the filtration cake, either during the disintegrating operation, or after the disintegrating operation and before the drying step.

9. Process according to one of Claims 5 to 8, in which the disintegrating operation comprises the addition of at least one aluminium compound C.

10. Process according to Claim 9, in which, during the disintegrating operation, at least one polycarboxylic acid and at least one aluminium compound C are simultaneously added to the filtration cake.

11. Process according to Claim 9, in which, during the disintegrating operation, at least one aluminium compound C is added to the filtration cake prior to the addition of at least one polycarboxylic acid.

12. Process according to Claim 9, in which at least one polycarboxylic acid is added to the filtration cake after the disintegrating operation.

13. Composition of polymers comprising a precipitated silica according to one of Claims 1 to 4.

14. Article comprising at least one composition according to Claim 13, this article consisting of a shoe sole, a floorcovering, a gas barrier, a flame-retardant material, a cable car roller, a seal for domestic electrical appliances, a seal for liquid or gas pipes, a braking system seal, a pipe, a sheathing, a cable, an engine support, a battery separator, a conveyor belt, a transmission belt, or a tyre.

**EP 3 110 759 B1**

## RÉFÉRENCES CITÉES DANS LA DESCRIPTION

**Documents brevets cités dans la description**

- FR 2886285 A1
- EP 0762992 A
- EP 0762993 A
- EP 0983966 A
- EP 1355856 A
- FR 2957914

**Littérature non-brevet citée dans la description**

- **BRUNAUER ; EMMET ; TELLER.** *The Journal of the American Chemical Society,* Février 1938, vol. 60, 309
- **DORRIS ; GRAY.** *J. Colloid Interface Sci.,* vol. 77 (180), 353-362